# EUROPÄISCHE PATENTSCHRIFT

(11) **EP 2 689 264 B1**
(45) Veröffentlichungstag und Bekanntmachung des Hinweises auf die Patenterteilung: **19.06.2019**
(21) Anmeldenummer: 12711383.5
(22) Anmeldetag: 22.03.2012
(51) Int. Cl.: G01S 7/48, G01S 17/08, G01S 7/497, G01S 17/02

(54) **ELEKTRO-OPTISCHES DISTANZMESSGERÄT MIT EINER MESSGERÄTBERÜHRUNGSFREI FUNKTIONIERENDEN GESTEN-MESSUNGSAUSLÖSUNG**
ELECTRO-OPTICAL DISTANCE MEASURING DEVICE WITH A GESTURE-BASED MEASUREMENT TRIGGER THAT FUNCTIONS WITHOUT CONTACTING THE MEASURING DEVICE
APPAREIL DE MESURE DE DISTANCE ÉLECTRO-OPTIQUE COMPRENANT UN DÉCLENCHEMENT DE MESURE PAR GESTE FONCTIONNANT SANS CONTACT

(30) Priorität: 22.03.2011 EP 11159282
(43) Veröffentlichungstag der Anmeldung: 29.01.2014
(73) Patentinhaber: Leica Geosystems AG, 9435 Heerbrugg (CH)
(72) Erfinder: BÜCHEL, Sven, CH-9443 Widnau (CH)
(74) Vertreter: Kaminski Harmann
(86) Internationale Anmeldenummer: PCT/EP2012/055154
(87) Internationale Veröffentlichungsnummer: WO 2012/127017

(56) Entgegenhaltungen:
- EP-A1- 1 566 658
- DE-A1-102006 041 077
- US-A1- 2006 256 007
- US-A1- 2011 260 033

## Beschreibung

Die Erfindung betrifft ein elektro-optisches handhaltbares Laser-Distanzmessgerät, zur Entfernungsmessung nach dem Oberbegriff der Ansprüche 1 und 3, ein Distanzmessverfahren mit einem solchen Distanzmessgerät nach dem Oberbegriff der Ansprüche 11 und 13 sowie ein Computerprogrammprodukt nach dem Oberbegriff des Anspruchs 16, wobei im Rahmen der Erfindung eine Distanzmessung ausgelöst wird, wenn eine festgelegte, in einem definierten Nahbereich um das Distanzmessgerät mit einem Testkörper ausgeführte Geste detektiert und als solche identifiziert wird.

Gattungsgemässe elektro-optische Messgeräte, insbesondere handhaltbare Laser-Distanzmessgeräte wie beispielsweise in der WO 2005/083465 beschrieben, zum optischen Messen von Distanzen sind seit Jahren bekannt und werden heutzutage in grosser Anzahl für unterschiedlichste Anwendungen, insbesondere im Bauwesen, eingesetzt. Mit ihnen können Distanzen, beispielsweise zwischen einem Messanschlag des Messgeräts und einem Oberflächenbereich eines Objekts, innerhalb eines Distanzmessbereichs von wenigen Dezimetern bis zu beispielsweise 30 Metern mit einer Genauigkeit von wenigen Millimetern optisch gemessen werden. Dabei werden in einer üblichen Ausführungsform eines solchen Messgeräts über eine Optik modulierte optische Strahlen als Sendestrahlen bzw. Messlichtstrahlen gegen das zu messende Objekt ausgesendet. Wenigstens ein Teil der Messlichtstrahlen wird vom Oberflächenbereich des Objekts in Richtung des Messgeräts zurück reflektiert. Über die Optik werden vom Oberflächenbereich reflektierte Strahlen (insbesondere beabstandet zu den Sendestrahlen) wieder eingesammelt und von einem Empfänger der Vorrichtung in ein elektrisches Signal umgewandelt.

Bekannte derartige elektro-optische Messgeräte und Distanzmessverfahren beruhen auf einer Messung der Laufzeit eines zeitlichen Lichtpulses oder einer Messung der Phasenverschiebung eines von dem Objekt reflektierten Laserstrahls.

Bei der Laufzeitmessung wird die Pulslaufzeit von der Laserlichtquelle zum Objekt und zurück zu einem Empfänger gemessen. Ein Vorteil dieser Ausführungsform ist die äusserst geringe erforderliche Messzeit. Nachteilig ist die entsprechend erforderliche sehr hohe Zeitauflösung der Lichtpuls-Detektion, im Nanosekunden- oder sogar Pikosekundenbereich, was hohe Anforderungen an die Detektionstechnologie erfordert, um Distanzen mit einer Auflösung im Zentimeter- oder sogar Millimeterbereich zu messen.

Elektro-optische Messgeräte und Distanzmessverfahren basierend auf Messung der Phase des reflektierten Laserlichts beruhen auf der Tatsache, dass die Phasenverschiebung des reflektierten Laserstrahls oder dessen Modulation gegenüber dem ausgesandten Strahl entfernungsabhängig ist. Typischerweise wird eine Frequenzmodulation der Laserlichtamplitude durchgeführt und die Phasenlage der aufmodulierten Signale ausgewertet.

Ein Vorteil dieser zweiten Variante des Messverfahrens ist eine gegenüber dem Laufzeitverfahren bei vergleichbarem messtechnischem Aufwand höhere erreichbare Auflösung der Distanzmessung.

Ein Nachteil dieser zweiten Variante beruht auf einer fehlenden Eindeutigkeit der Messung im Falle von Entfernungen bzw. resultierenden Phasenverschiebungen eines Vielfachen der halben Laser- bzw. Modulationswellenlänge. Diese Mehrdeutigkeit kann aufgehoben werden durch Messungen bei verschiedenen Laser-Wellenlängen und/oder Modulationsfrequenzen, was aber die Messzeit erhöht. Diese Lösung wird verbreitet bei handelsüblichen Laser-Distanzmessgeräten eingesetzt.

Bekannten elektro-optischen Distanzmessgeräten, insbesondere handhaltbaren Laser-Distanzmessgeräten, ist gemeinsam, dass typischerweise für die Auslösung der Messung der Distanz zu einem angezielten Raumpunkt eine von einem Benutzer zu betätigende Taste am Messgerät oder ein durch Berührung zu markierendes Feld auf einem Touch-Screen als Display des Geräts vorgesehen ist.

Bei einem solchen Vorgang der Auslösung der Messung durch eine mechanische Befehlseingabe kommt es leicht zu einer nicht beabsichtigten Verstellung des Messgeräts aus einer ursprünglich vorgesehenen Anzielrichtung, mit der Folge, dass sich, entfernungsabhängig, die Ausrichtung des Laserstrahls von einem zuvor angezielten Raumpunkt signifikant weg verschiebt, beispielsweise in der Grössenordnung etlicher Zentimeter, mit der Folge ungenauer Messergebnisse insbesondere im Fall von Messungen auf lange Distanzen.

Alternativ sind Fernauslöser bekannt, z.B. Kabel-Fernauslöser oder Infrarot/Bluetooth-Fernauslöser (vgl. im Bereich der Fotografie die seit über einem Jahrhundert bekannten mechanischen Drahtauslöser), mit welchen eine Messung ausgelöst werden kann ohne das Gerät letztendlich direkt berühren zu müssen. Dabei ist jedoch nachteilig und (sowohl hinsichtlich der Bedienbarkeit als auch technisch bzw. konstruktionsbedingt) aufwändig, dass dafür ein mit dem eigentlichen Messgerät (mechanisch und/oder elektronisch) verbundenes separates Fernauslösegerät erforderlich ist und dies auch benutzerseitig während einer Messaufgabe stets mitzuführen sowie zu bedienen ist. Aufgabe der vorliegenden Erfindung ist die Bereitstellung eines verbesserten elektro-optischen Distanzmessgeräts, insbesondere eines handhaltbaren Laser-Distanzmessgeräts und eines zugehörigen Messverfahrens, mit dem die vorgenannten Probleme und Nachteile bei der Auslösung des Messvorgangs verringert bzw. vermieden werden können. Insbesondere soll dabei eine möglichst benutzerfreundliche und intuitiv zu bedienende Auslösung einer Messung ermöglicht werden, sowohl ohne dass dafür das Messgerät selbst berührt werden muss, als auch ohne dass eine Zuhilfenahme eines zusätzlichen separaten Fernauslösegeräts erforderlich ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein elektro-optisches handhaltbares Laser-Distanzmessgerät, zur berührungslosen Entfernungsmessung, mit mindestens einem Laserdistanzmessmodul, das eine Laserquelle zur Aussendung eines optischen Messlichtstrahls in Richtung eines Objekts sowie einem Empfänger zur Detektion von reflektierten Anteilen des optischen Messlichtstrahls aufweist, und einer Auswerte- und Steuereinheit zur Bestimmung einer Entfernung basierend auf den empfangenen Anteilen des optischen Messlichtstrahls.

Erfindungsgemäss sind dabei solche Kriterien definiert und gespeichert, die für eine festgelegte, durch einen Benutzer mit einem Testkörper den Messlichtstrahl kodiert durchquerende Entfernungsmessungsauslöse-Geste charakteristisch sind. Zudem ist gemäss der Erfindung nun die Auswerte- und Steuereinheit zur Ausführung eines solchen Gesten-Messungsauslösemodus ausgebildet, in welchem die Detektion von reflektierten Anteilen des optischen Messlichtstrahls durch den Empfänger automatisch fortlaufend mit einer definierten Mindestrate erfolgt und automatisch durch die Auswerte- und Steuereinheit
□ die fortlaufend detektierten reflektierten Anteile des optischen Messlichtstrahls ausgewertet werden hinsichtlich von Kenngrössen, die von einer mit dem Testkörper den Messlichtstrahl kodiert durchquerenden Geste abhängig sind,
□ anhand der Kenngrössen überprüft wird, ob diese den definierten Kriterien entsprechen, und im Fall einer Entsprechung der Kriterien die durch den Benutzer ausgeführte Geste als die Entfernungsmessungsauslöse-Geste identifiziert wird, sowie
□ in Reaktion auf eine Identifizierung der Entfernungsmessungsauslöse-Geste eine Entfernungsmessung zum Objekt ausgelöst wird.

Ferner kann gemäss einer Weiterbildung der Erfindung die Auswerte- und Steuereinheit zur Ausführung des Gesten-Messungsauslösemodus derart ausgebildet sein, dass in Abhängigkeit von einem Verlauf von einer Intensität und/oder von einem Verlauf von einer Intensitätsänderung der fortlaufend detektierten reflektierten Anteile des optischen Messlichtstrahls überprüft wird, ob die Kriterien erfüllt werden,
im Speziellen wobei abhängig von
- einer Dauer, während welcher die Intensität innerhalb eines definierten Intensitätsfensters liegt,
- einer Abfolge von Intensitätsänderungen als im Verlauf der Intensität erkennbare Flanken, und/oder
- einer Anzahl von Intensitätsänderung als im Verlauf der Intensität erkennbare Flanken
überprüft wird, ob die Kriterien erfüllt werden.

Des Weiteren kann gemäss einer Weiterbildung der Erfindung die Auswerte- und Steuereinheit zur Ausführung des Gesten-Messungsauslösemodus derart ausgebildet sein, dass automatisch durch die Auswerte- und Steuereinheit anhand der fortlaufend detektierten reflektierten Anteile des optischen Messlichtstrahls eine Folge von Testkörper-Entfernungen zu dem den Messlichtstrahl durchquerenden Testkörper bestimmt werden und anhand der Folge von - zumindest anteilig als die Kenngrössen herangezogenen - Testkörper-Entfernungen überprüft wird, ob die Kriterien erfüllt werden,
insbesondere wobei abhängig von
• einer Dauer, während welcher eine Gruppe von direkt aufeinander folgenden Testkörper-Entfernungen aus der Folge von Testkörper-Entfernungen innerhalb eines definierten Entfernungsbereichs liegen,
• einer Abfolge von Änderungen jeweiliger Testkörper-Entfernungen untereinander aus der Folge als in der Folge von Testkörper-Entfernungen erkennbare Flanken, und/oder
• einer Anzahl von als massgeblich identifizierbaren Änderungen von Testkörper-Entfernungen aus der Folge als im Verlauf der fortlaufend bestimmten Testkörper-Entfernungen erkennbare Flanken
überprüft wird, ob die Kriterien erfüllt werden.

Dabei kann speziell auch die Auswerte- und Steuereinheit zur Ausführung des Gesten-Messungsauslösemodus derart ausgebildet sein, dass - verglichen mit einem Messmodus, in welchem nach Messauslösung eine präzise Bestimmung der Entfernung zum Objekt erfolgt - die Testkörper-Entfernungen der Folge von Testkörper-Entfernungen mit verhältnismässig geringer Genauigkeit, dafür jedoch fortlaufend mit verhältnismässig hoher Wiederholungsrate, bestimmt werden.

Insgesamt kann also im Rahmen der Erfindung dann in Reaktion auf eine Identifikation der Entfernungsmessungsauslöse-Geste (wie zuvor und auch im Folgenden noch näher beschrieben) eine Entfernungsmessung zum Objekt durch die Auswerte- und Steuereinheit automatisch ausgelöst und durchgeführt werden, insbesondere wobei - etwa in einem Standardmodus - mit einer Verzögerung von etwa zwischen einer viertel und einer ganzen Sekunde, im Speziellen mit einer Verzögerung von ungefähr einer halben Sekunde, nach der Identifikation der Entfernungsmessungsauslöse-Geste die eigentliche Entfernungsmessung zum Objekt erfolgt.

In einem Auslöseverzögerungsmodus (analog zur aus dem Fotoapparatebereich bekannten Selbstauslösefunktionalität), der alternativ oder zusätzlich zum Standardmodus vorgesehen sein kann, kann in Reaktion auf die Identifizierung der Entfernungsmessungsauslöse-Geste jedoch die eigentliche Entfernungsmessung auch automatisch erst mit einer definierten Zeit-Verzögerung von zwischen fünf und fünfzehn Sekunden ausgelöst und durchgeführt werden.

Die Auswerte- und Steuereinheit fungiert dabei zusammen mit dem Laserdistanzmessmodul in diesem erfindungsgemäss vorgesehenen Gesten-Messungsauslösemodus als Gestendetektor (bzw. bilden diese Komponenten - zumindest zum Teil - den Gestendetektor).

Der Gestendetektor weist also einen Testsignalwellen-Sender zur Aussendung von Testsignalwellen und einen Testsignalwellen-Empfänger zur Detektion von reflektierten Anteilen der Testsignalwellen auf, wobei der Testsignalwellen-Sender und der Testsignalwellen-Empfänger dabei identisch sind mit der Laserstrahlquelle bzw. dem Empfänger des Laserdistanzmessmodul. Zumindest in einem eingeschalteten Gesten-Messungsauslösemodus erfolgt dabei also dann eine Detektion von reflektierten Anteilen der Testsignalwellen fortlaufend mit einer definierten Mindestrate und anhand der fortlaufend detektierten, zumindest anteilig als die Kenngrössen herangezogenen Anteile wird überprüft, ob die Kriterien erfüllt werden. Insbesondere kann in Abhängigkeit von einem Verlauf der Intensität und/oder von einem Verlauf der Intensitätsänderung der fortlaufend detektierten reflektierten Anteile überprüft wird, ob die Kriterien erfüllt werden, im Speziellen wobei abhängig von einer Dauer, während welcher die Intensität innerhalb eines definierten Intensitätsfensters liegt, überprüft wird, ob die Kriterien erfüllt werden.

Gemäss einer speziellen Ausführungsform kann der Gestendetektor - d.h. also die Auswerte- und Steuereinheit zusammen mit dem Laserdistanzmessmodul, wenn diese zusammen im vorgesehenen Gesten-Messungsauslösemodus arbeiten - ausgebildet sein zur Bestimmung von Testkörper-Entfernungen zu dem durch den Benutzer geführten Testkörper, der eine die Messlichtstrahlung schneidende/durchquerende Bewegung ausführt. Wiederum in eingeschaltetem Gesten-Messungsauslösemodus kann dann eine fortlaufende Bestimmung von Testkörper-Entfernungen mit einer definierten Mindestrate erfolgen und anhand von einem Verlauf der fortlaufend bestimmten, zumindest anteilig als die Kenngrössen herangezogenen Testkörper-Entfernungen (also anhand von einer Folge der nacheinander ermittelten Testkörper-Entfernungen) überprüft werden, ob die Kriterien erfüllt werden. Im Speziellen kann abhängig von
- einer Dauer, während welcher die fortlaufend bestimmten Testkörper-Entfernungen innerhalb eines definierten Entfernungsbereichs liegen,
- einer Abfolge von Änderungen der Testkörper-Entfernungen als im Verlauf der fortlaufend bestimmten Testkörper-Entfernungen erkennbare Flanken, und/oder
- einer Anzahl von Änderungen der Testkörper-Entfernungen als im Verlauf der fortlaufend bestimmten Testkörper-Entfernungen erkennbare Flanken
überprüft werden, ob die Kriterien erfüllt werden.

In einer weiteren speziellen Ausführungsform kann dabei ein zusätzliches Ultraschall-Entfernungsmessmodul im Distanzmessgerät vorgesehen sein, das ebenso als Teil des Gestendetektors fungiert, sodass die Geste dann nochmals zusätzlich verifiziert werden kann, insbesondere wobei das Ultraschall-Entfernungsmessermodul im Wesentlichen in dieselbe Richtung ausgerichtet ist wie das Laserdistanzmessmodul.

Vorteilhaft kann jedoch auch das Laserdistanzmessmodul selbst zumindest anteilig als der Gestendetektor fungieren, wobei dieser zur - zumindest in eingeschaltetem Gesten-Messungsauslösemodus erfolgenden - fortlaufenden Bestimmung der Testkörper-Entfernungen ausgebildet ist, insbesondere wobei - verglichen mit einem Messmodus, in welchem nach Messauslösung die präzise Bestimmung der Entfernung zum Objekt erfolgt - die Bestimmung der Testkörper-Entfernungen mit verhältnismässig geringer Genauigkeit, dafür jedoch fortlaufend mit verhältnismässig hoher Wiederholungsrate erfolgt.

Gemäss einer weiteren Ausführungsform kann eine Kamera mit Bildverarbeitungseinheit vorgesehen sein, die ebenso als zusätzlicher Teil des Gestendetektors fungieren kann. Dabei kann die Kamera ausgebildet sein zur - zumindest in eingeschaltetem Gesten-Messungsauslösemodus erfolgenden - Aufnahme einer Bilder- oder Videosequenz von dem durch den Benutzer geführten Testkörper, der eine - ein definiertes Sichtfeld der Kamera schneidende - Bewegung ausführt. Anhand von der Bildverarbeitungseinheit können dann mit den Kriterien korrespondierende Gesten-Muster und/oder Testkörper-Muster in der Bildersequenzsequenz bzw. der Videosequenz erkannt und identifiziert werden. Die Kamera kann dabei vorteilhaft im Wesentlichen in dieselbe Richtung ausgerichtet sein wie das Laserdistanzmessmodul, damit eine von dem Distanzmessgerät aus stirnseitig ausgeführte Geste detektiert und identifiziert werden kann.

Gemäss einer weiteren Ausführungsform kann auch ein (kapazitiver oder induktiver) Annäherungsschalter bzw.
- sensor vorgesehen sein, der (z.B. zusammen mit einer Annäherungssensor-Output-Auswerteschaltung) zusätzlich einen Teil des Gestendetektos bildet. Dabei kann der (kapazitive oder induktive) Annäherungssensor (dessen Grundaufbau dem Fachmann per se bekannt ist) erfindungsgemäss ausgebildet sein zur - zumindest in eingeschaltetem Gesten-Messungsauslösemodus erfolgenden - Detektion eines sich innerhalb seines Detektionsbereichs befindlichen Testkörpers. Dabei ist der Annäherungssensor derart im/am Gerät angeordnet und derart ausgebildet ist, dass sein Detektionsbereich den definierten gewünschten Nahbereich um das Distanzmessgerät abdeckt. Ist dabei beispielsweise die folgende Geste mit
   - einem Bringen des Testkörpers in diesen bestimmten Nahbereichs, (sodass dieser auch den Messlichtstrahl unterbricht,)
   - einem Verweilen des Testkörpers im Messlichtstrahl im Nahbereich während eines vordefinierten Zeitraum-Bereichs (z.B. für genau Zeitraum zwischen einer halben und eineinhalb Sekunden) und
   - einem anschliessenden notwendigerweise erforderlichen Entfernen des Testkörpers aus dem Messlichtstrahl und aus dem Nahbereich
      als die kodierte Entfernungsmessungsauslöse-Geste festgelegt, so können beispielsweise die folgenden für diese Geste charakteristischen Kriterien gespeichert sein:
   - andauernde Detektion des Testkörpers durch den Empfänger des Lasermessmoduls bzw. durch den Annäherungssensor während eines Zeitraums von einer halben bis eineinhalb Sekunden und
   - anschliessendes Nichtmehrdetektieren des Testkörpers.

Diese Kriterien können anhand des Gestendetektors - in Gestalt des Annäherungssensors zusammen mit einer den Output des Annäherungssensors auswertenden Logik ("Annäherungssensor-Output-Auswerteschaltung" - wie etwa einer Auswerte- oder Datenverarbeitungseinheit) überprüft werden. Als Kenngrössen im Sinne der Erfindung wird dabei vom Annäherungssensor fortlaufend detektiert, ob sich der Testkörpers gerade im definierten Nahbereich aufhält oder nicht. Durch Auswertung einer fortlaufenden Aufzeichnung dieses Annäherungssensor-Outputs als Kenngrössen kann dann durch die Annäherungssensor-Output-Auswerteschaltung überprüft werden, ob die gespeicherten Kriterien (siehe beispielhaft die oben definierten Kriterien) erfüllt werden oder nicht, und falls ja kann automatisch sofort eine Entfernungsmessung ausgelöst werden.

Beispielsweise kann der Annäherungssensor (in dem Fachmann eigentlich bekannter Weise) ausgebildet sein zur Detektion der Präsenz von einer Hand als Testkörper beispielsweise innerhalb eines - etwa von der Vorderseite des Distanzmessgeräts vom Gerät wegorientierten - Umgebungsbereichs von z.B. einem bis 50 cm vor dem Gerät. Als anderes Beispiel kann der Annäherungssensor auch ausgebildet sein zur Detektion der Präsenz eines kleinen handgehaltenen Magneten als Testkörper rein beispielhaft innerhalb eines - etwa von der Oberseite des Distanzmessgeräts vom Gerät wegorientierten - Umgebungsbereichs von z.B. 10 bis 45 cm oberhalb dem Gerät, etc.

Derartige Annäherungssensoren sind bereits aus anderen Anwendungsbereichen bekannt, z.B. aus der Mobilfunktelefontechnik, wo sie etwa zur Detektion der Annäherung der Hand oder des Ohrs eines Benutzers an das Mobilfunktelefon genutzt werden und abhängig davon die Displaybeleuchtung gesteuert wird.

Allgemein können dabei rein beispielhaft folgende Körper als Testkörper fungieren, mit welchen die Entfernungsmessungsauslöse-Geste auszuführen ist:
- eine Hand des Benutzers,
- ein oder mehrere Fingern von einer Hand des Benutzers,
- ein Arm des Benutzers,
- eine handhaltbare Tafel oder Karte,
- ein handhaltbarer Magnet und/oder
- ein Nichtleiter wie etwa ein Plastikwürfel, der eine verhältnismässig hohe Dielektrizitätskonstante aufweist.

Wird eine handhaltbaren Tafel oder Karte als Testkörper verwendet, kann dabei ein Oberfläche der Tafel bzw. Karte zumindest teilweise einen - verglichen mit der sonstigen Umgebung bzw. einer gewöhnlichen Wandoberfläche - hohen Reflexionsgrad oder hohen aufweisenden. Im Speziellen kann eine Oberfläche der Tafel bzw. Karte ein vordefiniertes bekanntes Kodemuster aus Bereichen mit vergleichsweise hohem Reflexionsgrad und Bereichen mit vergleichsweise niedrigem Reflexionsgrad und/oder ein vordefiniertes bekanntes Kodemuster aus dunklen und hellen und/oder unterschiedlich farbigen Bereichen aufweisen.

Zudem können beispielhaft derartige Kriterien definiert und gespeichert sein, die für eine mit dem Testkörper
- mit einer Geschwindigkeit innerhalb eines definierten Geschwindigkeitsbereichs,
- in einer Entfernung innerhalb des definierten Nahbereichs, insbesondere zwischen 5 und 100 cm, im Speziellen zwischen 10 und 50 cm,
- für einen Zeitraum innerhalb eines definierten Zeitraumbereichs andauernd und/oder
- innerhalb eines definierten Sichtfeldbereichs vom Distanzmessgerät aus
ausgeführte Testkörper-Bewegung als die Entfernungsmessauslöse-Geste charakteristisch sind.

Mittels einer solchen gerätegehäuseberührungslosen Messauslöse-Funktionalität kann vorteilhaft beim Vorgang der Auslösung des Messvorgangs eine unbeabsichtigte Änderung der Ausrichtung des Geräts vermieden werden. Dieses wirkt sich vorteilhaft auf die Messgenauigkeit aus und trägt bei zur Vermeidung von Fehlmessungen.

Im Folgenden wird die Erfindung nochmals mit anderen Worten beschrieben:
Das erfindungsgemässe elektro-optische, insbesondere handhaltbare Entfernungsmessgerät kann also mindestens ein Messgerätgehäuse, einen (der Entfernungsmesseinheit zugeordneten) optischen Sendepfad, mit zumindest einem optischen Sender zur Aussendung eines optischen Messlichtstrahls in Richtung eines Objekts, und einen (der Entfernungsmesseinheit zugeordneten) optischen Empfangspfad, mit einer Empfangsoptik zur Bündelung von reflektierten Anteilen des optischen Messlichtstrahls in Richtung auf einen Empfänger, aufweisen.

Zudem kann gemäss einer vorteilhaften Ausführungsform - wie eingangs in ähnlicher Weise bereits erläutert - das elektro-optische Messgerät einen (funktional dem Gestendetektor angehörigen) Testsignalwellen-Sendepfad, mit zumindest einem Sender zur Aussendung von Testsignalwellen, einen (funktional dem Gestendetektor angehörigen) Testsignalwellen-Empfangspfad, mit zumindest einem Detektor zur Detektion reflektierter Anteile der ausgesandten Testsignalwellen, aufweisen. Des Weiteren ist das elektro-optische Messgerät erfindungsgemäss mit einer Funktionalität zur Auslösung einer elektro-optischen Distanzmessung ausgestattet, in deren Rahmen eine präzise Entfernungsmessung ausgelöst wird, wenn der Testsignalwellen-Sendepfad in einem Nahbereich des elektro-optischen Distanzmessgeräts, vorzugsweise innerhalb eines Abstands zwischen 1 cm und 100 cm von dem elektro-optischen Distanzmessgerät, während eines kurzen definierten Zeitraumes, beispielsweise für einen zwischen etwa einer Zehntelsekunde und etwa einer halben oder dreiviertel Sekunde liegenden Zeitraum unterbrochen wird. Die Unterbrechung kann durch Führen des Testkörpers (wie beispielsweise durch eine Hand des Benutzers, im Folgenden teilweise auch Target genannt) durch den Testsignalwellen-Sendepfad erfolgen, d.h. sodass der Testkörper den Testsignalwellen-Sendepfad schneidet.

Zum Nachweis einer Unterbrechung des Testwellen-Sendepfads werden reflektierte Anteile der Testwellen mit einer hohen Frequenz, beispielsweise in einem Takt von 100 ms, gemessen. Dabei sind für den Unterbrechungsnachweis zwei verschiedene Messverfahren vorgesehen.

Beispielhaft kann dabei ein Messverfahren auf einer Messung der Intensität der reflektierten Anteile der Testwellen beruhen. Bei Ermittlung einer starken Intensitätsänderung, beispielsweise in einer Grössenordnung von mehr als 10 %, insbesondere von mehr als 50 %, wird die elektro-optische Distanzmessung ausgelöst. Diese Methode ist typischerweise dann vorteilhaft, wenn die Reflexionssignale in Gegenwart und Abwesenheit des Targets sich stark unterscheiden.

Ein weiteres alternatives beispielhaftes Messverfahren kann auch auf einer Messung der Distanz zu dem Target beruhen. Wenn die festgestellte Distanz niedriger als ein vorgegebener Schwellenwert ist, beispielsweise weniger als 1 m, wird wiederum die elektro-optische Distanzmessung ausgelöst. Für die Distanzmessung im Rahmen dieses zweiten Messverfahrens zum Nachweis einer Unterbrechung des Testwellen-Sendepfads ist keine hohe Auflösung erforderlich, sondern eine Grobmessung ist ausreichend. Dieses zweite Messverfahren ist vor allem dann vorteilhaft einsetzbar, wenn die Reflexionssignale in Gegenwart und Abwesenheit des Testkörpers bzw. Targets nur geringe Unterschiede aufweisen.

Diese beiden beschriebenen Messverfahren können alternativ zueinander oder - zur Erhöhung der Robustheit des Erkennens und Identifizierens der bekannten, anhand der Kriterien charakterisierbaren Messauslöse-Geste - auch in Kombination eingesetzt werden.

Mittels einer solchen gerätegehäuseberührungslosen Messauslöse-Funktionalität kann vorteilhaft beim Vorgang der Auslösung des Messvorgangs eine unbeabsichtigte Änderung der Ausrichtung des Geräts vermieden werden. Dieses wirkt sich vorteilhaft auf die Messgenauigkeit aus und trägt bei zur Vermeidung von Fehlmessungen.

Bezüglich der Geometrie der Auslegung von optischem Sendepfad und Testsignalwellen-Sendepfad und der zugehörigen Empfangspfade, die typischerweise lateral beabstandet zu den zugehörigen Sendepfaden angeordnet sind, bestehen verschiedene Ausführungsmöglichkeiten.

Optischer Sendepfad und Testsignalwellen-Sendepfad können in unterschiedlicher Richtung zueinander angeordnet sein, beispielsweise der optische Sendepfad ausgehend von einer Stirnfläche und der Testsignalwellen-Sendepfad ausgehend von einer Seitenfläche des elektro-optischen Messgeräts.

Als für einen Benutzer ergonomischer und daher vorteilhaft kann angesehen werden, wenn der optische Sendepfad und der Testsignalwellen-Sendepfad parallel, insbesondere gleichgerichtet, zueinander ausgerichtet sind.

Bei den Testsignalwellen handelt es sich um optische Wellen, d.h. Lichtwellen, insbesondere im sichtbaren oder nahen infraroten Wellenlängenbereich, die durch die Laserquelle des Laserdistanzmessmoduls ausgesendet werden, sodass also der optische Sendepfad und der Testsignalwellen-Sendepfad sowie der optische Empfangspfad und der Testsignalwellen-Empfangspfad jeweils miteinander identisch sind. Dadurch wird der Einsatz von nur einem optischen Sender und nur einer Empfangsoptik mit einem Empfänger ermöglicht, was vorteilhaft resultierende Komplexität und erforderliche Baugrösse des erfindungsgemässen elektro-optischen Messgeräts vermindert.

Als weitere Testsignalwellen können zusätzlich auch von einem akustischen Sender akustische Wellen, insbesondere Ultraschallwellen, ausgesandt und von einem akustischen Detektor empfangen werden.

Eine besondere Ausführungsform des erfindungsgemässen elektro-optischen Messgeräts zeichnet sich dadurch aus, dass die Funktionalität zur Auslösung einer elektro-optischen Distanzmessung mittels zeitlich aufgelöster und/oder ortsaufgelöster Detektion von Mustern höherer und niedrigerer Intensität im Nahbereich des elektro-optischen Messgeräts reflektierter Testsignalwellen und deren Verarbeitung in einer Auswerte- und Steuereinheit des elektro-optischen Messgeräts eine Durchführung unterschiedlicher Steuerbefehle, zusätzlich zur Auslösung einer Distanzmessung, in Abhängigkeit von einem detektierten Muster ermöglicht.

Gemäss dieser Ausführungsform des erfindungsgemässen Messverfahrens können beispielsweise die Muster höherer und niedrigerer Intensität von im Nahbereich des elektro-optischen Messgeräts reflektierter Testsignalwellen durch Bewegung einer Hand als Testkörper bzw. Target, mit vollständig oder teilweise gespreizten Fingern, durch den Testsignalwellen-Sendepfad erzeugt werden.

Derartige Muster höherer und niedrigerer Intensität von im Nahbereich des elektro-optischen Messgeräts reflektierten Testsignalwellen können auch durch Bewegung eines Trägers (z.B. handhaltbare Tafel oder handhaltbare Karte) als Target, mit einer darauf aufgebrachten Relief-, Farb- oder Hell/Dunkel-Codierung, durch den Testsignalwellen-Sendepfad erzeugt werden.

Angelehnt an die - in Zusammenhang mit dem erfindungsgemässen Distanzmessgerät - obig beschriebenen technischen Lehren, betrifft die Erfindung des Weiteren auch ein elektro-optisches Distanzmessverfahren mittels eines Distanzmessgeräts, insbesondere mittels eines handhaltbaren Laser-Distanzmessgeräts, mit mindestens
- einem Auslösen eines Entfernungsmessvorgangs und
- einem in Reaktion auf das Auslösen automatisch erfolgenden Ausführen des Entfernungsmessvorgangs mit
   □ einem Aussendens von einem optischen Messlichtstrahl in Richtung eines Objekts sowie einem Detektieren von reflektierten Anteilen des optischen Messlichtstrahls und
   □ einem Bestimmen der Entfernung zum Objekt basierend auf den empfangenen Anteilen des optischen Messlichtstrahls,
   Erfindungsgemäss sind dabei nun wiederum solche Kriterien definiert und gespeichert, die für eine festgelegte, durch einen Benutzer mit einem Testkörper den Messlichtstrahl kodiert durchquerende Entfernungsmessungsauslöse-Geste charakteristisch sind.

Zudem erfolgt gemäss dem Kern der Erfindung im Rahmen eines Gesten-Messungsauslösemodus
□ ein Detektieren von reflektierten Anteilen des optischen Messlichtstrahls fortlaufend mit einer definierten Mindestrate,
□ ein Auswerten der fortlaufend detektierten reflektierten Anteile des optischen Messlichtstrahls hinsichtlich von Kenngrössen, die von einer mit dem Testkörper den Messlichtstrahl kodiert durchquerenden Geste abhängig sind,
□ ein Überprüfen anhand der Kenngrössen, ob diese den definierten Kriterien entsprechen, und - im Fall einer Entsprechung der Kriterien - Identifizieren der durch den Benutzer ausgeführten Geste als die Entfernungsmessungsauslöse-Geste sowie
□ das Auslösen des Entfernungsmessvorgangs bei Identifizierung der Entfernungsmessungsauslöse-Geste.

Die oben bereits das erfindungsgemässe Distanzmessgerät weiterbildenden bzw. beispielhaft näher beschreibenden Merkmale sind dabei ebenso auf das erfindungsgemässe Distanzmessverfahren analog anwendbar und können somit auch analog zur Weiterbildung bzw. zur näheren Spezifizierung des erfindungsgemässen Distanzmessverfahrens herangezogen werden.

Ein weiterer Gegenstand der Erfindung ist - wiederum den Kerngedanken der erfindungsgemässen Lehre analog zu Vorherigem aufgreifend - ein Computerprogrammprodukt mit Programmcode, der auf einem maschinenlesbaren Träger gespeichert ist, wobei solche Kriterien definiert und gespeichert, die für eine festgelegte, durch einen Benutzer mit einem Testkörper den Messlichtstrahl kodiert durchquerende Entfernungsmessungsauslöse-Geste charakteristisch sind, und wobei das Computerprogrammprodukt mit dem Programmcode ausgelegt ist zur Steuerung und Durchführung der folgenden Schritte des vorgenannten erfindungsgemässen Distanzmessverfahrens:
□ Auswerten der fortlaufend detektierten reflektierten Anteile des optischen Messlichtstrahls hinsichtlich von Kenngrössen, die von einer mit dem Testkörper den Messlichtstrahl kodiert durchquerenden Geste abhängig sind,
□ Überprüfen anhand der Kenngrössen, ob diese den definierten Kriterien entsprechen, und - im Fall einer Entsprechung der Kriterien - Identifizieren der durch den Benutzer ausgeführten Geste als die Entfernungsmessungsauslöse-Geste sowie
□ Auslösen des Entfernungsmessvorgangs bei Identifizierung der Entfernungsmessungsauslöse-Geste,
   insbesondere wenn das Programm auf einer als Auswerte- und Steuereinheit des Distanzmessgeräts (nach einem der vorgenannten Ausführungsformen) ausgebildeten elektronischen Datenverarbeitungseinheit ausgeführt wird.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen illustrieren:
- Fig. 1: ein handhaltbares Laser-Distanzmessgerät nach dem Stand der Technik;
- Fig. 2: das Laser-Distanzmessgerät nach Figur 1 in einem Anwendungsbeispiel;
- Fig. 3a-3c: ein handhaltbares Laser-Distanzmessgerät als Beispiel eines erfindungsgemässen elektrooptischen Distanzmessgeräts und das damit ausführbare erfindungsgemässe Messverfahren.
- Fig. 4: ein weiteres Beispiel für ein erfindungsgemässes und als handhaltbares Laser-Distanzmessgerät ausgebildetes Distanzmessgerät in einem Anwendungsfall auf einem Stativ.

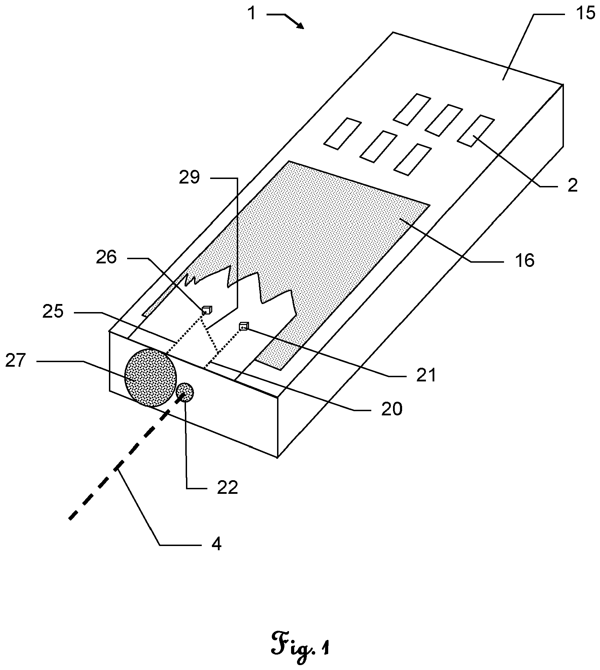

Figur 1 zeigt ein als handgehaltenes und auf ein geeignetes (Klein-)Stativ montierbares Laserentfernungsmessgerät ausgeführtes elektro-optisches Messgerät 1. Dieses weist ein Gehäuse 15 und Betätigungselemente 2 zum Ein- bzw. Ausschalten des Entfernungsmessgeräts sowie zum Starten bzw. Konfigurieren eines Messvorgangs auf. Neben den Betätigungselementen 12 besitzt das Messgerät 1 ein Display 16 zur Wiedergabe von Messergebnissen und Angaben des Gerätestatus. Schematisch und prinzipiell angedeutet weist das Gerät einen Sendepfad 20 mit einem Sender 21 zur Aussendung von optischen Messstrahlen 4 und einem Austrittsfenster 22 für die Messstrahlen 4 sowie einen Empfangspfad 25 mit einem Empfänger 26 und einer Empfangsoptik 27 auf.

Der Sender 21, das Austrittsfenster 22, der Empfänger 26 und die Empfangsoptik 27 sind innerhalb des Gehäuses an einem (der einfacheren Erkennbarkeit halber nicht explizit dargestellten) Optik-Trägerkörper befestigt. Der Optik-Trägerkörper liegt dabei so im Gehäuse 5, dass das Austrittsfenster 22 und die Empfangsoptik 27 jeweils hinter Öffnungen des Gehäuses 15 angeordnet sind.

Der Optik-Träger kann dabei einen - z.B. zylindrisch geformten - Sendekanal zwischen Sender und Austrittsfenster 22 sowie einen Empfangskanal zwischen Empfangsoptik 27 und Empfänger aufweisen, wobei im Empfangskanal gegebenenfalls ein Umlenkmittel zum Umlenken des empfangenen Strahls auf den Empfänger angeordnet sein kann. Zusätzlich kann der Optik-Trägerkörper so ausgebildet sein, dass ein Teil der Sendestrahlen als Referenzstrahlen 29 vor Austritt aus dem Gerät auf den Empfänger gelenkt werden.

Die Messung von Distanzen erfolgt nach aus dem Stand der Technik bekannten Prinzipien, wie z.B. dem Pulslaufzeit-oder Phasenvergleichsprinzip.

Der Laserentfernungsmesser kann ausserdem weitere aus dem Stand der Technik bekannte und fachübliche Komponenten und/oder Funktionen aufweisen.

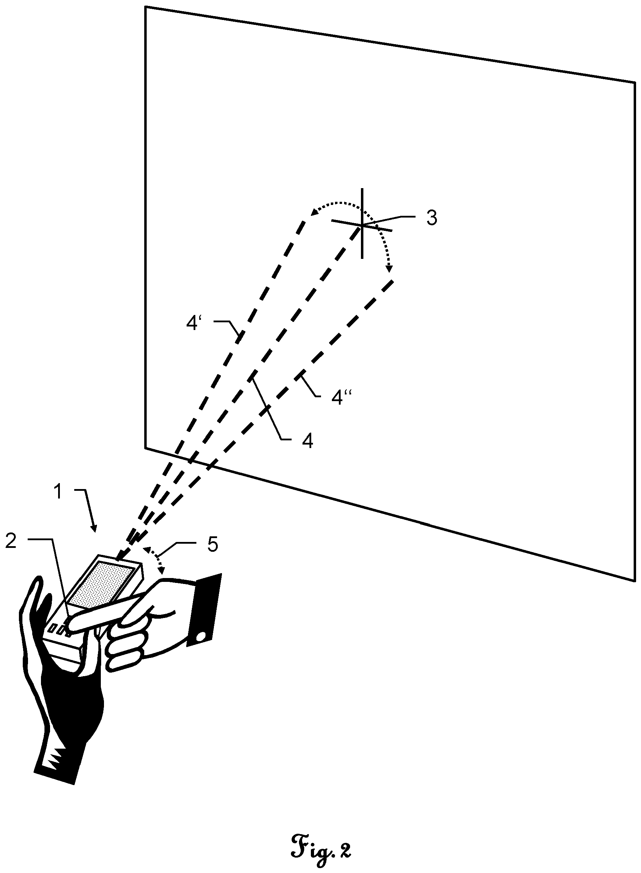

Figur 2 zeigt das Laser-Distanzmessgerät nach Figur 1 in Anwendung bei einer Messung. Von dem Laser-Distanzmessgerät 1 wird ein Laserstrahl 4 in Richtung eines zu vermessenden Raumpunkts 3 ausgesandt. Auf dem Laser-Distanzmessgerät 1 ist eine Eingabetaste 2 angeordnet, durch deren Betätigung ein Bediener eine Distanzmessung zu dem Raumpunkt 3 auslösen kann.

Aufgrund der Auslösung der Messung durch diese mechanische Befehlseingabe kommt es leicht zu einer nicht beabsichtigten Verstellung des Messgeräts aus einer ursprünglich vorgesehenen Anzielrichtung, was durch den Doppelpfeil 5 angedeutet ist. Dieses hat zur Folge, dass sich, entfernungsabhängig, die Ausrichtung des Laserstrahls 4 in Richtung von Laserstrahlen 4', 4'' von dem zuvor angezielten Raumpunkt 3 signifikant weg verschiebt, beispielsweise in der Grössenordnung etlicher Zentimeter, was auch ungenaue Ergebnisse bezüglich der eigentlichen Distanzmessung zu Folge hat.

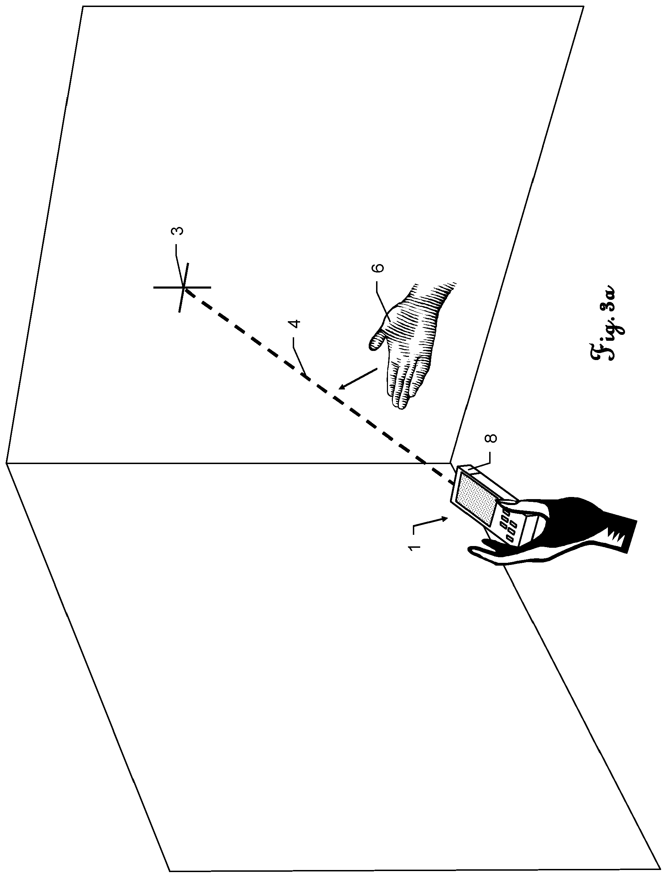

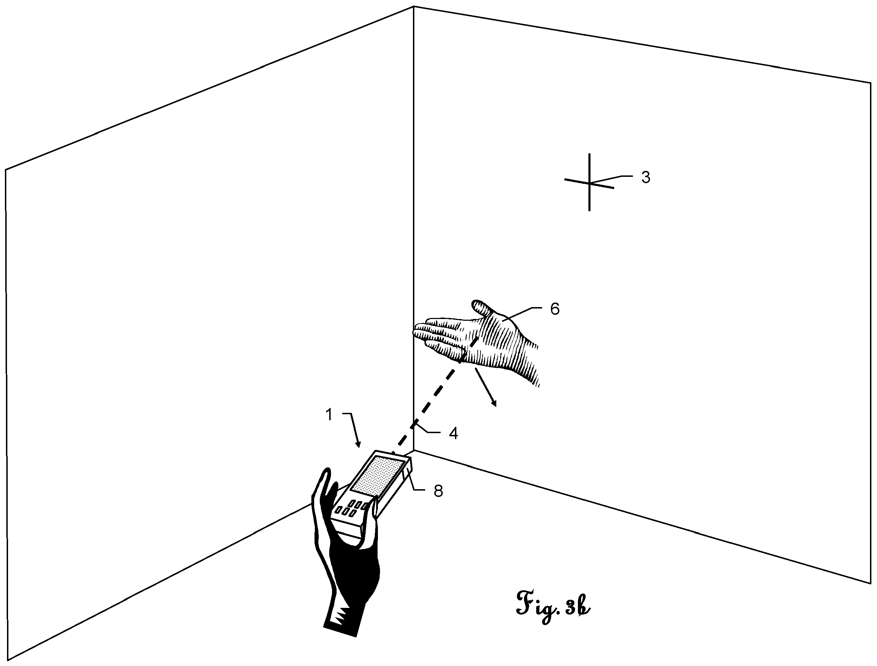

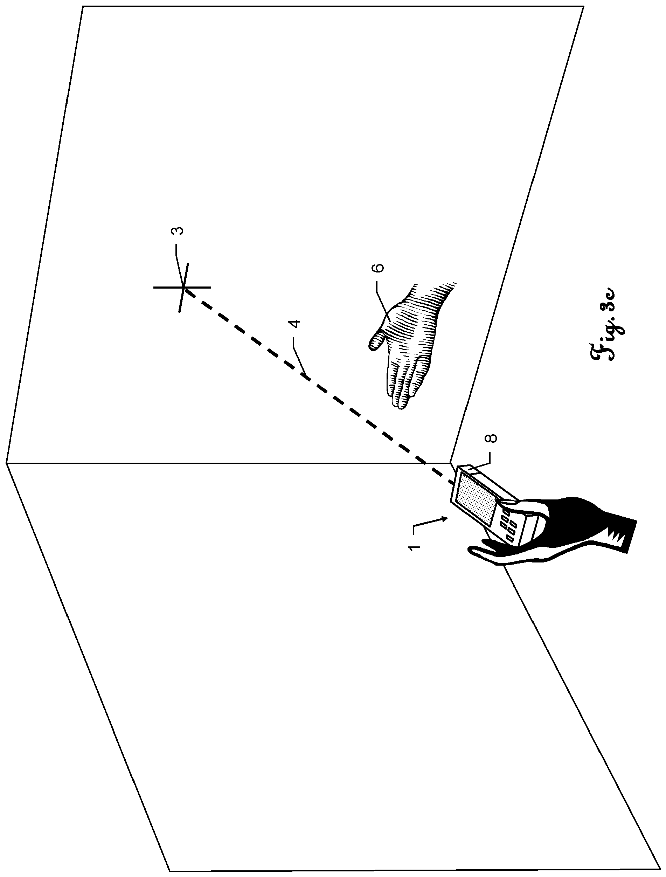

Die Figuren 3a bis 3c illustrieren eine bevorzugte Ausführungsform der Erfindung zur Überwindung dieses Problems, gemäss welcher der optische Sendepfad und der Testsignalwellen-Sendepfad sowie der optische Empfangspfad und der Testsignalwellen-Empfangspfad jeweils miteinander identisch sind, sodass in diesem Ausführungsbeispiel also das EDM-Modul (Distanzmessmodul des Geräts 1) selbst als wesentlicher Bestandteil des Gestendetektors 8 fungiert. Dargestellt ist dabei lediglich der von dem Laser-Distanzmessgerät 1 in Richtung des Raumpunkts 3 ausgesandte Laserstrahl 4. Wie in Figur 3b dargestellt, wird zwecks Auslösung einer Distanzmessung eine Hand als Beispiel eines Testkörpers 6 durch den in diesem Beispiel mit dem optischen Sendepfad, d.h. Laserstrahl 4, identischen Testsignalwellen-Sendepfad geführt, wodurch die Ausbreitung am Ort der durchgeführten Hand des Laserlichts in Richtung des Raumpunkts 3, beispielsweise in einem Abstand von 10 cm bis 50 cm vom Laser-Distanzmessgerät 1, kurzzeitig, typischerweise für Bruchteile einer Sekunde, unterbrochen wird, bis die Hand als Testkörper 6 aus dem Laserstrahl 4 wieder herausgeführt ist.

Zum Nachweis einer Unterbrechung des in diesem Fall mit dem optischen Sendepfad (Laserstrahl 4) identischen Testwellen-Sendepfads werden reflektierte Anteile der Testwellen mit einer hohen Frequenz, beispielsweise in einem Takt von 100 ms, gemessen. Dabei sind für den Unterbrechungsnachweis zwei verschiedene Messverfahren vorgesehen.

Das erste Messverfahren beruht auf einer Messung der Intensität der reflektierten Anteile der Testwellen. Bei Ermittlung einer starken Intensitätsänderung wird die elektro-optische Distanzmessung innerhalb eines kurzen Zeitraums nach der Sendestrahl-Unterbrechung, beispielsweise nach einer halben Sekunde, ausgelöst. Diese Methode ist typischerweise dann vorteilhaft, wenn die Reflexionssignale in Gegenwart und Abwesenheit des Testkörpers 6 sich stark unterscheiden.

Das zweite Messverfahren beruht auf einer Messung der Distanz zu dem Testkörper 6. Wenn die festgestellte Distanz niedriger als ein vorgegebener Schwellenwert ist, beispielsweise weniger als 1 m, wird wiederum die elektro-optische Distanzmessung ausgelöst. Für die Distanzmessung im Rahmen dieses zweiten Messverfahrens zum Nachweis einer Unterbrechung des Testwellen-Sendepfads ist keine hohe Auflösung erforderlich, sondern eine Grobmessung ist ausreichend. Dieses zweite Messverfahren ist vor allem dann vorteilhaft einsetzbar, wenn die Reflexionssignale in Gegenwart und Abwesenheit des Testkörpers 6 nur geringe Unterschiede aufweisen.

Das erste und das zweite Messverfahren können alternativ zueinander oder auch in Kombination eingesetzt werden.

Mittels dieser anhand der Figuren 3a bis 3c illustrierten Erfindung und deren Weiterbildungen kann vorteilhaft beim Vorgang der messgerätgehäuseberührungslosen Auslösung des Messvorgangs eine unbeabsichtigte Änderung der Ausrichtung des Messgeräts (welche eine ungewollte Änderung der anvisierten Zielposition implizieren würde) vermieden werden. Dieses wirkt sich vorteilhaft auf die Messgenauigkeit aus und trägt bei zur Vermeidung von Fehlmessungen.

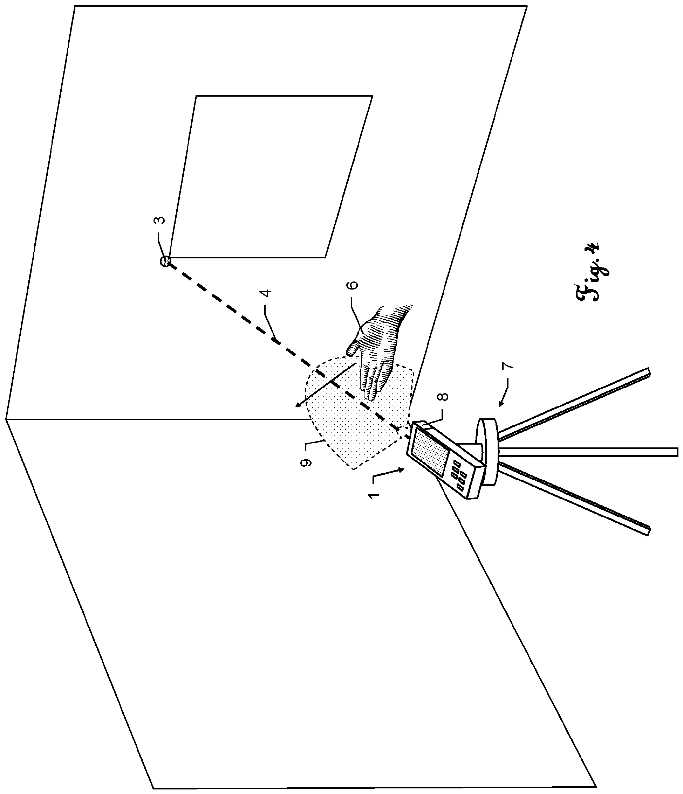

Figur 4 zeigt ein weiteres Ausführungsbeispiel für ein - erfindungsgemäss mit einem Gestendetektor 8 ausgestatteten und eine messgerätberührungslos vorgesehene Messungsauslöse-Funktionalität aufweisenden - Distanzmessgerät, das als handhaltbares Laser-Distanzmessgerät ausgebildet ist und auf einem Stativ 7 montiert ist. Das Stativ kann dabei in - etwa aus dem Bereich der Innenraumvermessung - bekannter Weise als Bodenstativ ausgeführt sein oder alternativ in - etwa aus dem Fotoapparate-Bereich - bekannter Weise als Tisch-Kleinstativ.

Durch Bereitstellung der erfindungsgemässen messgerätberührungslos erfolgenden Auslösung einer Entfernungsmessung kann nun der Benutzer das auf dem Stativ montierte Laser-Distanzmessgerät mit seinem Laserstrahl 4 hochpräzise auf den gewünschten Messpunkt 3 ausrichten und durch Ausführung der festgelegten Geste (z.B. mit seiner Hand als Testkörper 6) im Nahbereich 9 des Geräts 1 eine Messung auslösen, ohne dabei das Messgerät erneut berühren und eine ansonsten gefährdete ungewollte Missausrichtung kurz vor der eigentlichen Messung in Kauf nehmen zu müssen. Auch auf eine aus dem Stand der Technik ansonsten bekannte und körperlich separat ausgeführte, sich jedoch sowohl baulich als auch bedienungsseitig aufwändig gestaltende Funk- oder Bluetooth-Fernbedienung für die Auslösung eines Messvorgangs kann somit erfindungsgemäss verzichtet werden.

Es versteht sich, dass diese dargestellten Figuren nur mögliche Ausführungsbeispiele schematisch darstellen. Die verschiedenen Ansätze können erfindungsgemäss miteinander sowie mit Vorrichtungen des Stands der Technik kombiniert werden.

## Patentansprüche

1. Elektro-optisches handhaltbares Laser-Distanzmessgerät (1) zur berührungslosen Entfernungsmessung, mit mindestens
• einem Laserdistanzmessmodul, das eine Laserquelle zur Aussendung eines optischen Messlichtstrahls (4) in Richtung eines Objekts (3) sowie einem Empfänger zur Detektion von reflektierten Anteilen des optischen Messlichtstrahls (4) aufweist, und
• einer Auswerte- und Steuereinheit zur Bestimmung einer Entfernung basierend auf den empfangenen Anteilen des optischen Messlichtstrahls (4), **dadurch gekennzeichnet, dass**
• solche Kriterien für Kenngrößen definiert und gespeichert sind, die für eine festgelegte, durch einen Benutzer mit einem Testkörper (6) den Messlichtstrahl (4) kodiert durchquerende Entfernungsmessungsauslöse-Geste charakteristisch sind, wobei die Entfernungsmessungsauslöse-Geste
□ ein Bringen des Testkörpers in einen bestimmten Nahbereich, sodass dieser auch den Messlichtstrahl unterbricht,
□ ein Verweilen des Testkörpers im Messlichtstrahl im Nahbereich während eines vordefinierten Zeitraum-Bereichs und
□ ein anschliessendes notwendigerweise erforderliches Entfernen des Testkörpers aus dem Messlichtstrahl und aus dem Nahbereich umfasst,
• die Auswerte- und Steuereinheit zur Ausführung eines Gesten-Messungsauslösemodus ausgebildet ist, in welchem die Detektion von reflektierten Anteilen des optischen Messlichtstrahls (4) durch den Empfänger automatisch fortlaufend mit einer definierten Mindestrate erfolgt und automatisch durch die Auswerte- und Steuereinheit
□ die fortlaufend detektierten reflektierten Anteile des optischen Messlichtstrahls (4) ausgewertet werden hinsichtlich der Kenngrössen, die von einer mit dem Testkörper (6) den Messlichtstrahl (4) kodiert durchquerenden Geste abhängig sind,
□ anhand der Kenngrössen überprüft wird, ob diese den definierten Kriterien entsprechen, und im Fall einer Entsprechung der Kriterien die durch den Benutzer ausgeführte Geste als die Entfernungsmessungsauslöse-Geste identifiziert wird, sowie
□ in Reaktion auf eine Identifizierung der Entfernungsmessungsauslöse-Geste eine Entfernungsmessung zum Objekt (3) ausgelöst wird
wobei die Auswerte- und Steuereinheit zur Ausführung des Gesten-Messungsauslösemodus derart ausgebildet ist, dass in Abhängigkeit von einem Verlauf von zumindest einem von
• einer Intensität und
• einer Intensitätsänderung der fortlaufend detektierten reflektierten Anteile des optischen Messlichtstrahls (4) überprüft wird, ob die Kenngrößen den definierten Kriterien entsprechen.

2. Distanzmessgerät (1) nach Anspruch 1,
**dadurch gekennzeichnet, dass**
abhängig von mindestens einem von
• einer Dauer, während welcher die Intensität innerhalb eines definierten Intensitätsfensters liegt,
• einer Abfolge von Intensitätsänderungen als im Verlauf der Intensität erkennbare Flanken, und
• einer Anzahl von Intensitätsänderung als im Verlauf der Intensität erkennbare Flanken überprüft wird, ob die Kenngrößen den definierten Kriterien entsprechen.

3. Elektro-optisches handhaltbares Laser-Distanzmessgerät (1) zur berührungslosen Entfernungsmessung, mit mindestens
• einem Laserdistanzmessmodul, das eine Laserquelle zur Aussendung eines optischen Messlichtstrahls (4) in Richtung eines Objekts (3) sowie einem Empfänger zur Detektion von reflektierten Anteilen des optischen Messlichtstrahls (4) aufweist, und
• einer Auswerte- und Steuereinheit zur Bestimmung einer Entfernung basierend auf den empfangenen Anteilen des optischen Messlichtstrahls (4),
**dadurch gekennzeichnet, dass**
• solche Kriterien für Kenngrößen definiert und gespeichert sind, die für eine festgelegte, durch einen Benutzer mit einem Testkörper (6) den Messlichtstrahl (4) kodiert durchquerende Entfernungsmessungsauslöse-Geste charakteristisch sind, wobei die Entfernungsmessungsauslöse-Geste
□ ein Bringen des Testkörpers in einen bestimmten Nahbereich, sodass dieser auch den Messlichtstrahl unterbricht,
□ ein Verweilen des Testkörpers im Messlichtstrahl im Nahbereich während eines vordefinierten Zeitraum-Bereichs und
□ ein anschliessendes notwendigerweise erforderliches Entfernen des Testkörpers aus dem Messlichtstrahl und aus dem Nahbereich umfasst,
• die Auswerte- und Steuereinheit zur Ausführung eines Gesten-Messungsauslösemodus ausgebildet ist, in welchem die Detektion von reflektierten Anteilen des optischen Messlichtstrahls (4) durch den Empfänger automatisch fortlaufend mit einer definierten Mindestrate erfolgt und automatisch durch die Auswerte- und Steuereinheit
□ die fortlaufend detektierten reflektierten Anteile des optischen Messlichtstrahls (4) ausgewertet werden hinsichtlich der Kenngrössen, die von einer mit dem Testkörper (6) den Messlichtstrahl (4) kodiert durchquerenden Geste abhängig sind,
□ anhand der Kenngrössen überprüft wird, ob diese den definierten Kriterien entsprechen, und im Fall einer Entsprechung der Kriterien die durch den Benutzer ausgeführte Geste als die Entfernungsmessungsauslöse-Geste identifiziert wird, sowie
□ in Reaktion auf eine Identifizierung der Entfernungsmessungsauslöse-Geste eine Entfernungsmessung zum Objekt (3) ausgelöst wird
wobei die Auswerte- und Steuereinheit zur Ausführung des Gesten-Messungsauslösemodus derart ausgebildet ist, dass automatisch durch die Auswerte- und Steuereinheit anhand der fortlaufend detektierten reflektierten Anteile des optischen Messlichtstrahls (4) eine Folge von Testkörper-Entfernungen zu dem den Messlichtstrahl (4) durchquerenden Testkörper bestimmt werden und anhand der Folge von - zumindest anteilig als die Kenngrössen herangezogenen - Testkörper-Entfernungen überprüft wird, ob die Kenngrößen den definierten Kriterien entsprechen.

4. Distanzmessgerät (1) nach Anspruch 3,
**dadurch gekennzeichnet, dass**
abhängig von mindestens einem von
• einer Dauer, während welcher eine Gruppe von direkt aufeinander folgenden Testkörper-Entfernungen aus der Folge von Testkörper-Entfernungen innerhalb eines definierten Entfernungsbereichs liegen,
• einer Abfolge von Änderungen jeweiliger Testkörper-Entfernungen untereinander aus der Folge als in der Folge von Testkörper-Entfernungen erkennbare Flanken, und
• einer Anzahl von als massgeblich identifizierbaren Änderungen von Testkörper-Entfernungen aus der Folge als im Verlauf der fortlaufend bestimmten Testkörper-Entfernungen erkennbare Flanken überprüft wird, ob die Kenngrößen den definierten Kriterien entsprechen.

5. Distanzmessgerät (1) nach Anspruch 3 oder 4,
**dadurch gekennzeichnet, dass**
die Auswerte- und Steuereinheit zur Ausführung des Gesten-Messungsauslösemodus derart ausgebildet ist, dass verglichen mit einem Messmodus, in welchem nach Messauslösung eine präzise Bestimmung der Entfernung zum Objekt erfolgt die Testkörper-Entfernungen der Folge von Testkörper-Entfernungen mit geringerer Genauigkeit, dafür jedoch fortlaufend mit höherer Wiederholungsrate, bestimmt werden.

6. Distanzmessgerät (1) nach einem der vorherigen Ansprüche,
**gekennzeichnet durch**
eine im Wesentlichen in dieselbe Richtung wie das Laserdistanzmessmodul ausgerichtete Kamera mit Bildverarbeitungseinheit, wobei
• die Kamera ausgebildet ist zur zumindest in eingeschaltetem Gesten-Messungsauslösemodus erfolgenden Aufnahme einer Bilder- oder Videosequenz von dem durch den Benutzer geführten Testkörper, der eine ein definiertes Sichtfeld der Kamera schneidende Bewegung ausführt, und
• die Bildverarbeitungseinheit zur Erkennung von mindestens einem von
□ mit den Kriterien korrespondierenden Gesten-Mustern und
□ Testkörper-Mustern in der Bildersequenz bzw. der Videosequenz
ausgebildet ist, und anhand davon seitens der Auswerte- und Steuereinheit im Rahmen des Gesten-Messungsauslösemodus zusätzlich überprüft wird, ob die erkannten Gesten-Muster bzw. Testkörper-Muster den gespeicherten Kriterien entsprechen oder nicht, und im Fall der Entsprechung die durch den Benutzer ausgeführte Geste als die Entfernungsmessungsauslöse-Geste zusätzlich verifiziert wird.

7. Distanzmessgerät (1) nach einem der vorherigen Ansprüche,
**gekennzeichnet durch**
einen kapazitiven oder induktiven Annäherungssensor mit Annäherungssensor-Output-Auswerteschaltung, wobei
• der Annäherungssensor ausgebildet ist zur zumindest in einem eingeschalteten Gesten-Messungsauslösemodus erfolgenden fortlaufenden Detektion, ob sich der Testkörper im Detektionsbereich des Annäherungssensors befindet oder nicht, wobei der Annäherungssensor derart angeordnet und ausgebildet ist, dass sein Detektionsbereich den definierten gewünschten Nahbereich um das Distanzmessgerät abdeckt, und
• die Annäherungssensor-Output-Auswerteschaltung ausgebildet ist zur Auswertung der Ergebnisse der fortlaufenden Detektion und zur anhand dieser zumindest anteilig als die Kenngrößen herangezogenen - Ergebnisse erfolgenden zusätzlichen Überprüfung, ob die Kenngrößen den definierten gespeicherten Kriterien entsprechen oder nicht, sodass im Fall der Entsprechung die durch den Benutzer ausgeführte Geste als die Entfernungsmessungsauslöse-Geste zusätzlich verifizierbar ist.

8. Distanzmessgerät (1) nach einem der vorherigen Ansprüche,
**dadurch gekennzeichnet, dass**
derartige Kriterien definiert und gespeichert sind, die für eine mit einer handhaltbaren Tafel oder Karte, welche zumindest teilweise eine einen hohen Reflexionsgrad aufweisende Oberfläche hat, als der Testkörper ausgeführte Entfernungsmessungsauslöse-Geste charakteristisch sind, im Speziellen wobei eine Oberfläche der Tafel bzw. Karte ein vordefiniertes bekanntes Kodemuster
□ aus Bereichen mit vergleichsweise hohem Reflexionsgrad und Bereichen mit vergleichsweise niedrigem Reflexionsgrad oder
□ aus zumindest einem von vergleichsweise dunklen, hellen und unterschiedlich farbigen Bereichen aufweist.

9. Distanzmessgerät (1) nach einem der vorherigen Ansprüche,
**dadurch gekennzeichnet, dass**
derartige Kriterien definiert und gespeichert sind, die für eine mit dem Testkörper
ausgeführte, den Messlichtstrahl (4) schneidende Testkörper-Bewegung als die Entfernungsmessungsauslöse-Geste charakteristisch sind, wobei die Entfernungsmessungsauslöse-Geste mit dem Testkörper gemäss zumindest einer der folgenden Bedingungen ausgeführt wird:
• mit einer Geschwindigkeit innerhalb eines definierten Geschwindigkeitsbereichs,
• in einer Entfernung innerhalb eines definierten Nahbereichs um das Distanzmessgerät (1), insbesondere zwischen 5 und 100 cm, im Speziellen zwischen 10 und 50 cm,
• für einen Zeitraum innerhalb eines definierten Zeitraumbereichs andauernd, und
• innerhalb eines definierten Sichtfeldbereichs vom Distanzmessgerät (1) aus.

10. Distanzmessgerät (1) nach einem der vorherigen Ansprüche,
**dadurch gekennzeichnet, dass**
in Reaktion auf die Identifizierung der Entfernungsmessungsauslöse-Geste die Entfernungsmessung zum Objekt (3) durch die Auswerte- und Steuereinheit gemäss zumindest einer der folgenden Bedingungen ausgelöst und durchgeführt wird:
• in einem Standardmodus automatisch mit einer Verzögerung von etwa zwischen einer viertel und einer ganzen Sekunde, insbesondere mit einer Verzögerung von ungefähr einer halben Sekunde, und
• in einem Auslöseverzögerungsmodus automatisch mit einer definierten Zeit-Verzögerung von zwischen fünf und fünfzehn Sekunden.

11. Elektro-optisches Distanzmessverfahren mittels eines handhaltbaren Laser-Distanzmessgeräts (1), mit mindestens
• einem Auslösen eines Entfernungsmessvorgangs und
• einem in Reaktion auf das Auslösen automatisch erfolgenden Ausführen des Entfernungsmessvorgangs mit
□ einem Aussendens von einem optischen Messlichtstrahl (4) in Richtung eines Objekts (3) sowie einem Detektieren von reflektierten Anteilen des optischen Messlichtstrahls (4) und
□ einem Bestimmen der Entfernung zum Objekt (3) basierend auf den empfangenen Anteilen des optischen Messlichtstrahls (4),
**dadurch gekennzeichnet, dass**
• solche Kriterien für Kenngrößen definiert und gespeichert sind, die für eine festgelegte, durch einen Benutzer mit einem Testkörper (6) den Messlichtstrahl (4) kodiert durchquerende Entfernungsmessungsauslöse-Geste charakteristisch sind, wobei die Entfernungsmessungsauslöse-Geste
□ ein Bringen des Testkörpers in einen bestimmten Nahbereich, sodass dieser auch den Messlichtstrahl unterbricht,
□ ein Verweilen des Testkörpers im Messlichtstrahl im Nahbereich während eines vordefinierten Zeitraum-Bereichs und
□ ein anschliessendes notwendigerweise erforderliches Entfernen des Testkörpers aus dem Messlichtstrahl und aus dem Nahbereich umfasst, und
• im Rahmen eines Gesten-Messungsauslösemodus
□ ein Detektieren von reflektierten Anteilen des optischen Messlichtstrahls (4) fortlaufend mit einer definierten Mindestrate erfolgt,
□ die fortlaufend detektierten reflektierten Anteile des optischen Messlichtstrahls (4) ausgewertet werden hinsichtlich der Kenngrössen, die von einer mit dem Testkörper (6) den Messlichtstrahl (4) kodiert durchquerenden Geste abhängig sind,
□ anhand der Kenngrössen überprüft wird, ob diese den definierten Kriterien entsprechen, und im Fall einer Entsprechung der Kriterien die durch den Benutzer ausgeführte Geste als die Entfernungsmessungsauslöse-Geste identifiziert wird, sowie
□ bei Identifizierung der Entfernungsmessungsauslöse-Geste das Auslösen erfolgt
wobei in Abhängigkeit von einem Verlauf von zumindest einem von
• einer Intensität und
• einer Intensitätsänderung der fortlaufend detektierten reflektierten Anteile des optischen Messlichtstrahls (4) überprüft wird, ob Z die Kenngrößen den definierten Kriterien entsprechen.

12. Distanzmessverfahren nach Anspruch 11,
**dadurch gekennzeichnet, dass**
abhängig von zumindest einem von
• einer Dauer, während welcher die Intensität innerhalb eines definierten Intensitätsfensters liegt,
• einer Abfolge von Intensitätsänderungen als im Verlauf der Intensität erkennbare Flanken, und
• einer Anzahl von Intensitätsänderung als im Verlauf der Intensität erkennbare Flanken überprüft wird, ob die Kenngrößen den definierten Kriterien entsprechen.

13. Elektro-optisches Distanzmessverfahren mittels eines handhaltbaren Laser-Distanzmessgeräts (1), mit mindestens
• einem Auslösen eines Entfernungsmessvorgangs und
• einem in Reaktion auf das Auslösen automatisch erfolgenden Ausführen des Entfernungsmessvorgangs mit
□ einem Aussendens von einem optischen Messlichtstrahl (4) in Richtung eines Objekts (3) sowie einem Detektieren von reflektierten Anteilen des optischen Messlichtstrahls (4) und
□ einem Bestimmen der Entfernung zum Objekt (3) basierend auf den empfangenen Anteilen des optischen Messlichtstrahls (4),
**dadurch gekennzeichnet, dass**
• solche Kriterien für Kenngrößen definiert und gespeichert sind, die für eine festgelegte, durch einen Benutzer mit einem Testkörper (6) den Messlichtstrahl (4) kodiert durchquerende Entfernungsmessungsauslöse-Geste charakteristisch sind, wobei die Entfernungsmessungsauslöse-Geste
□ ein Bringen des Testkörpers in einen bestimmten Nahbereich, sodass dieser auch den Messlichtstrahl unterbricht,
□ ein Verweilen des Testkörpers im Messlichtstrahl im Nahbereich während eines vordefinierten Zeitraum-Bereichs und
□ ein anschliessendes notwendigerweise erforderliches Entfernen des Testkörpers aus dem Messlichtstrahl und aus dem Nahbereich umfasst, und
• im Rahmen eines Gesten-Messungsauslösemodus
□ ein Detektieren von reflektierten Anteilen des optischen Messlichtstrahls (4) fortlaufend mit einer definierten Mindestrate erfolgt,
□ die fortlaufend detektierten reflektierten Anteile des optischen Messlichtstrahls (4) ausgewertet werden hinsichtlich der Kenngrössen, die von einer mit dem Testkörper (6) den Messlichtstrahl (4) kodiert durchquerenden Geste abhängig sind,
□ anhand der Kenngrössen überprüft wird, ob diese den definierten Kriterien entsprechen, und im Fall einer Entsprechung der Kriterien die durch den Benutzer ausgeführte Geste als die Entfernungsmessungsauslöse-Geste identifiziert wird, sowie
□ bei Identifizierung der Entfernungsmessungsauslöse-Geste das Auslösen erfolgt
wobei anhand der fortlaufend detektierten reflektierten Anteile des optischen Messlichtstrahls (4) eine Folge von Testkörper-Entfernungen zu dem den Messlichtstrahl (4) durchquerenden Testkörper bestimmt werden und anhand der Folge von zumindest anteilig als die Kenngrössen herangezogenen Testkörper-Entfernungen überprüft wird, ob die Kenngrößen den definierten Kriterien entsprechen.

14. Distanzmessverfahren nach Anspruch 13,
**dadurch gekennzeichnet, dass**
abhängig von zumindest einem von
• einer Dauer, während welcher eine Gruppe von direkt aufeinander folgenden Testkörper-Entfernungen aus der Folge von Testkörper-Entfernungen innerhalb eines definierten Entfernungsbereichs liegen,
• einer Abfolge von Änderungen jeweiliger Testkörper-Entfernungen untereinander aus der Folge als in der Folge von Testkörper-Entfernungen erkennbare Flanken, und
• einer Anzahl von als massgeblich identifizierbaren Änderungen von Testkörper-Entfernungen aus der Folge als im Verlauf der fortlaufend bestimmten Testkörper-Entfernungen erkennbare Flanken überprüft wird, ob die Kenngrößen den definierten Kriterien entsprechen.

15. Distanzmessverfahren nach einem der Ansprüche 11 bis 14,
**dadurch gekennzeichnet, dass**
die Testkörper-Entfernungen der Folge von Testkörper-Entfernungen verglichen mit einem Messmodus, in welchem nach Messauslösung das präzise Bestimmen der Entfernung zum Objekt erfolgt mit geringerer Genauigkeit, dafür jedoch fortlaufend mit höherer Wiederholungsrate, bestimmt werden.

16. Computerprogrammprodukt mit Programmcode, der auf einem maschinenlesbaren Träger gespeichert ist, wobei das Computerprogrammprodukt mit dem Programmcode ausgelegt ist zur Steuerung und Durchführung der Schritte eines Distanzmessverfahrens nach einem der Ansprüche 11 bis 15, wenn das Programm auf einer als Auswerte-und Steuereinheit eines Distanzmessgeräts (1) nach einem der Ansprüche 1 bis 10 ausgebildeten elektronischen Datenverarbeitungseinheit ausgeführt wird.

## Claims

1. An electro-optical handheld distance measuring device (1) for contactless distance measurement, comprising at least
• a laser distance measuring module that has a laser source for emitting an optical measuring light beam (4) in the direction of an object (3), and a receiver for detecting reflected components of the optical measuring light beam (4), and
• an evaluation and control unit for determining a distance on the basis of the received components of the optical measuring light beam (4),
**characterized in that**
• criteria for parameters are defined and stored which are such as to characterize a stipulated distance measurement triggering gesture made by a user to cross the measuring light beam (4) in an encoded fashion with the aid of a test body (6), whereby the stipulated distance measurement triggering gesture comprises
o bringing the test body into a determined close range so that said body also interrupts the measuring light beam,
o keeping the test body in the measuring light beam in the close range during a predefined period range and
o subsequently necessarily removing the test body from the measuring light beam and from the close range,
• the evaluation and control unit is designed to execute a gesture measurement triggering mode in which the detection of reflected components of the optical measuring light beam (4) is performed automatically and continuously at a defined minimum rate by the receiver, and the evaluation and control unit automatically
∘ evaluates the continuously detected reflected components of the optical measuring light beam (4) with regards to the parameters that are dependent on a gesture crossing the measuring light beam (4) in an encoded fashion with the aid of the test body (6),
∘ uses the parameters to check whether these correspond to the defined criteria and, in the event of correspondence with the criteria, the gesture made by the user is identified as the distance measurement triggering gesture, and
∘ triggers a distance measurement relating to the object (3) in response to an identification of the distance measurement triggering gesture,
whereby the evaluation and control unit is designed to execute the gesture measurement triggering mode in such a way to check as a function of a profile of
• an intensity, and/or
• a change in intensity
of continuously detected reflected components of the optical measuring light beam (4) whether the parameters correspond to the defined criteria.

2. The distance measuring device (1) as claimed in claim 1,
**characterized in that**
whether the parameters correspond to the defined criteria being checked as a function of
• a period during which the intensity lies within a defined intensity window,
• a sequence of changes in intensity as edges detectable in the intensity profile, and/or
• a number of change in intensity as edges detectable in the intensity profile.

3. An electro-optical handheld distance measuring device (1) for contactless distance measurement, comprising at least
• a laser distance measuring module that has a laser source for emitting an optical measuring light beam (4) in the direction of an object (3), and a receiver for detecting reflected components of the optical measuring light beam (4), and
• an evaluation and control unit for determining a distance on the basis of the received components of the optical measuring light beam (4),
**characterized in that**
• criteria for parameters are defined and stored which are such as to characterize a stipulated distance measurement triggering gesture made by a user to cross the measuring light beam (4) in an encoded fashion with the aid of a test body (6), whereby the stipulated distance measurement triggering gesture comprises
∘ bringing the test body into a determined close range so that said body also interrupts the measuring light beam,
∘ keeping the test body in the measuring light beam in the close range during a predefined period range and
∘ subsequently necessarily removing the test body from the measuring light beam and from the close range,
• the evaluation and control unit is designed to execute a gesture measurement triggering mode in which the detection of reflected components of the optical measuring light beam (4) is performed automatically and continuously at a defined minimum rate by the receiver, and the evaluation and control unit automatically
∘ evaluates the continuously detected reflected components of the optical measuring light beam (4) with regards to the parameters that are dependent on a gesture crossing the measuring light beam (4) in an encoded fashion with the aid of the test body (6),
∘ uses the parameters to check whether these correspond to the defined criteria and, in the event of correspondence with the criteria, the gesture made by the user is identified as the distance measurement triggering gesture, and
∘ triggers a distance measurement relating to the object (3) in response to an identification of the distance measurement triggering gesture,
whereby the evaluation and control unit is designed to execute the gesture measurement triggering mode in such a way that with the aid of the continuously detected reflected components of the optical measuring light beam (4) the evaluation and control unit automatically determines a sequence of test body distances relating to the test body crossing the measuring light beam (4), and whether the parameters correspond to the defined criteria is checked with the aid of the sequence of test body distances - used at least pro rata as the parameters.

4. The distance measuring device (1) as claimed in claim 3,
**characterized in that**
whether the parameters correspond to the defined criteria is checked as a function being checked as a function of
• a period during which a group of directly sequential test body distances from the sequence of test body distances lie within a defined distance range,
• a sequence of changes in respective test body distances among one another from the sequence as edges detectable in the sequence of test body distances, and/or
• a number of changes, identifiable as decisive, in test body distances from the sequence as edges detectable in the profile of the continuously determined test body distances.

5. The distance measuring device (1) as claimed in claim 3 or 4,
**characterized in that**
the evaluation and control unit is designed to execute the gesture measurement triggering mode in such a way that - compared with a measurement mode in which precise determination of the distance relating to the object is performed after measurement triggering - the test body distances of the sequence of test body distances are determined with relatively low accuracy, but, in return, continuously with a relatively high repetition rate.

6. The distance measuring device (1) as claimed in one of the preceeding claims,
**characterized by**
a camera with an image processing unit,
• the camera being designed to take - at least when the gesture measurement triggering mode is switched on - an image or video sequence of the test body, which is guided by the user and executes a movement intersecting a defined field of view of the camera, and
• the image processing unit being designed to detect gesture pattern corresponding to the criteria and/or test body pattern in the image sequence or the video sequence so that on the basis thereof it is additionally checked whether the detected gesture patterns and/or test body patterns correspond to the stored criteria or not, and in the case of correspondence the gesture executed by the user being additionally verified as the distance measurement triggering gesture,
the camera being aligned substantially in the same direction as the laser distance measuring module.

7. The distance measuring device (1), as claimed in one of the preceeding claims,
**characterized by**
a capacitive or inductive proximity sensor with a proximity sensor output evaluation circuit,
• the proximity sensor being designed to continuously detect - at least when the gesture measurement triggering mode is switched on - whether the test body is or is not located in the detection range of the proximity sensor as the parameters, the proximity sensor being arranged and designed in such a way that its detection range covers the defined desired close range around the distance measuring device, and
• the proximity sensor output evaluation circuit being designed to evaluate the results of the continuous detection -used at least pro rata as the parameters- and to use these results to additionally conduct a check as to whether the parameters correspond to the stored criteria or not so that in the case of correspondance of the criteria the gesture executed by the user can additionally be verified as the distance measurement triggering gesture.

8. The distance measuring device (1) as claimed in one of the preceeding claims,
**characterized in that**
criteria are defined and stored which are such as to characterize a distance measurement triggering gesture executed by, as the test body, a handheld board or card,- at least partially - with a surface having a high reflectivity, specifically a surface of the board or card having a predefined known code pattern
o composed of regions of comparatively high reflectivity and regions of comparatively low reflectivity, or
∘ composed of comparatively dark, bright and/or differently colored regions.

9. The distance measuring device (1) as claimed in one of the preceeding claims,
**characterized in that**
criteria are defined and stored which are such as to characterize as the distance measurement triggering gesture test body movement on which intersects the measuring light beam (4) and is executed by the test body
• with a speed that is within a defined speed range,
• at a distance within a defined close range about the distance measuring device (1), in particular between 5 and 100 cm, specifically between 10 and 50 cm,
• for a period lasting within a defined period range, and/or
• within a defined area of the field of view from the distance measuring device (1).

10. The distance measuring device (1) as claimed in one of the preceeding claims
**characterized in that**
in response to the identification of the distance measurement triggering gesture the distant measurement relating to the object (3)
• is triggered and carried out automatically in a standard mode by the evaluation and control unit with a delay of approximately between a quarter and a whole second, in particular with a delay of approximately half a second, and/or
• is triggered and carried out by the evaluation and control unit automatically in a trigger delay mode with a defined time delay of between five and fifteen seconds.

11. An electrode-optical distance measurement method by means of a handheld distance measuring device (1) comprising at least
• triggering of a distance measuring operation, and
• automatically conducting an execution of the distance measuring operation in response to the triggering by
∘ emitting an optical measuring light beam (4) in the direction of an object (3) and detecting reflected components of the optical measuring light beam (4), and
∘ determining the distance relating to the object (3) on the basis of the received components of the optical measuring light beam (4),
**characterized in that**
• criteria for parameters are defined and stored which are such as to characterize a stipulated distance measurement triggering gesture made by a user to cross the measuring light beam (4) in an encoded fashion with the aid of a test body (6),
whereby the stipulated distance measurement triggering gesture comprises
∘ bringing the test body into a determined close range so that said body also interrupts the measuring light beam,
∘ keeping the test body in the measuring light beam in the close range during a predefined period range and
∘ subsequently necessarily removing the test body from the measuring light beam and from the close range, and
• within the context of a gesture measurement triggering mode,
∘ reflected components of the optical measuring light beam (4) are continuously detected at a defined minimum rate,
∘ the continuously detected reflected components of the optical measuring light beam (4) are evaluated with regards to the parameters that are dependent on a gesture crossing the measuring light beam (4) in an encoded fashion with the aid of the test body (6), the parameters are used to check whether these correspond to the defined criteria and, in the event of correspondence with the criteria, the gesture made by the user is identified as the distance measurement triggering gesture, and
∘ triggering is conducted upon identification of the distance measurement triggering gesture,
whereby whether the parameters correspond to the defined criteria is checked as a function of a profile of
• an intensity, and/or
• a change in intensity
of continuously detected reflected components of the optical measuring light beam (4).

12. The distance measurement method as claimed in claim 11,
**characterized in that**
whether the parameters correspond to the defined criteria being checked as a function of
• a period during which the intensity lies within a defined intensity window,
• a sequence of changes in intensity as edges detectable in the intensity profile, and/or
• a number of change in intensity as edges detectable in the intensity profile.

13. An electrode-optical distance measurement method by means of a handheld distance measuring device (1) comprising at least
• triggering of a distance measuring operation, and
• automatically conducting an execution of the distance measuring operation in response to the triggering by
∘ emitting an optical measuring light beam (4) in the direction of an object (3) and detecting reflected components of the optical measuring light beam (4), and
∘ determining the distance relating to the object (3) on the basis of the received components of the optical measuring light beam (4),
**characterized in that**
• criteria for parameters are defined and stored which are such as to characterize a stipulated distance measurement triggering gesture made by a user to cross the measuring light beam (4) in an encoded fashion with the aid of a test body (6),
whereby the stipulated distance measurement triggering gesture comprises
∘ bringing the test body into a determined close range so that said body also interrupts the measuring light beam,
∘ keeping the test body in the measuring light beam in the close range during a predefined period range and
∘ subsequently necessarily removing the test body from the measuring light beam and from the close range, and
• within the context of a gesture measurement triggering mode,
∘ reflected components of the optical measuring light beam (4) are continuously detected at a defined minimum rate,
∘ the continuously detected reflected components of the optical measuring light beam (4) are evaluated with regards to the parameters that are dependent on a gesture crossing the measuring light beam (4) in an encoded fashion with the aid of the test body (6), the parameters are used to check whether these correspond to the defined criteria and, in the event of correspondence with the criteria, the gesture made by the user is identified as the distance measurement triggering gesture, and
∘ triggering is conducted upon identification of the distance measurement triggering gesture,
whereby a sequence of test body distances relating to the test body crossing the measuring light beam (4) is determined, and whether the parameters correspond to the defined criteria is checked with the aid of the sequence of test body distances -used at least pro rata as the parameters.

14. The distance measurement method as claimed in claim 13,
**characterized in that**
whether the parameters correspond to the defined criteria is checked as a function being checked as a function of
• a period during which a group of directly sequential test body distances from the sequence of test body distances lie within a defined distance range,
• a sequence of changes in respective test body distances among one another from the sequence as edges detectable in the sequence of test body distances, and/or
• a number of changes, identifiable as decisive, in test body distances from the sequence as edges detectable in the profile of the continuously determined test body distances.

15. The distance measurement method as claimed in one of claims 11 to 14,
**characterized in that**
compared with a measurement mode in which precise determination of the distance relating to the object is performed after measurement triggering - the test body distances of the sequence of test body distances are determined with relatively low accuracy, but, in return, continuously with a relatively high repetition rate.

16. A computer program product with program code which is stored on a machine readable carrier, in which the computer program product with the program code is designed to control and carry out the distance measurement method as claimed in one of claims 11 to 15, when the program is executed on an electronic data processing unit designed as an evaluation and control unit of the distance measuring device (1) as claimed in one of claims 1 to 10.

## Revendications

1. Appareil de mesure de distance électro-optique portable à laser (1) destiné à la télémétrie sans contact, doté d'au moins
• un module de mesure de distance à laser, comportant une source laser pour l'émission d'un rayon lumineux de mesure optique (4) dans la direction d'un objet (3) ainsi qu'un récepteur pour la réception de la fraction réfléchie du rayon lumineux de mesure optique (4), et
• une unité de contrôle et de commande pour la détermination d'une distance se basant sur les fractions reçues du rayon lumineux de mesure optique (4),
**caractérisé en ce que**
• sont définis et enregistrés pour des paramètres des critères tels qu'ils sont caractéristiques pour un geste fixé de déclenchement de mesure télémétrique traversant le rayon lumineux, codé par un utilisateur avec un corps de test (6) du rayon lumineux de mesure optique (4), dans lequel le geste de déclenchement de mesure télémétrique comprend
° un placement du corps du test dans une zone proche déterminée, de sorte que celui-ci coupe aussi le rayon lumineux de mesure,
° un séjour du corps de test dans le rayon lumineux de mesure pendant un intervalle de temps prédéfini et
° un éloignement consécutif nécessairement requis du corps de test hors du rayon lumineux de mesure et hors de la zone proche,
• l'unité de contrôle et de commande est conçue pour la réalisation d'un mode de déclenchement de mesure de gestes, où la détection des fractions réfléchies du rayon lumineux de mesure optique (4) s'effectue automatiquement en continu avec une vitesse minimale définie et, automatiquement par l'unité de contrôle et de commande
° les fractions réfléchies du rayon lumineux de mesure optique (4) détectées en continu sont évaluées par rapport aux paramètres, lesquels dépendent d'un geste codé avec le corps de test (6) traversant le rayon lumineux de mesure (4) de façon codée,
° il est vérifié à l'aide des paramètres si celles-ci correspondent aux critères définis, et en cas de correspondance des critères le geste réalisé par l'utilisateur est identifié comme geste de déclenchement de mesure télémétrique, de même que
∘ en réaction à une identification du geste de déclenchement de mesure télémétrique une mesure de l'éloignement de l'objet (3) est déclenchée
dans lequel l'unité de contrôle et de commande est conçue pour réaliser le mode de déclenchement d'une mesure de geste de sorte qu'en fonction d'une courbe d'au moins une parmi
• une intensité et
• une modification d'intensité
des fractions réfléchies du rayon lumineux de mesure optique (4) détectées en continu, il est vérifié si les paramètres correspondent aux critères définis.

2. Appareil de mesure de distance (1) selon la revendication 1,
**caractérisé en ce qu'**en fonction d'au moins un parmi
• une durée, pendant laquelle l'intensité se trouve à l'intérieur d'un intervalle d'intensité définie,
• une série de modifications d'intensités comme flancs reconnaissables dans la courbe d'intensité, et
• un nombre de modifications d'intensités comme flancs reconnaissables dans la courbe d'intensité
il est vérifié si les paramètres correspondent aux critères définis.

3. Appareil de mesure de distance électro-optique portable à laser (1) destiné à la télémétrie sans contact, doté d'au moins
• un module de distance de mesure au laser, comportant une source laser pour l'émission d'un rayon lumineux de mesure optique (4) dans la direction d'un objet (3) ainsi qu'un récepteur pour la réception de la fraction réfléchie du rayon lumineux de mesure optique (4), et
• une unité de contrôle et de commande pour la détermination d'une distance se basant sur la fraction reçue du rayon lumineux de mesure optique (4),
**caractérisé en ce que**
• sont définis et enregistrés pour des paramètres des critères tels qu'ils sont caractéristiques pour un geste fixé de déclenchement de mesure télémétrique traversant le rayon lumineux, codé par un utilisateur avec un corps de test (6) du rayon lumineux de mesure optique (4), dans lequel le geste de déclenchement de mesure télémétrique comprend
° un placement du corps du test dans une zone proche déterminée, de sorte que celui-ci coupe aussi le rayon lumineux de mesure,
° un séjour du corps de test dans le rayon lumineux de mesure pendant un intervalle de temps prédéfini et
° un éloignement consécutif nécessairement requis du corps de test hors du rayon lumineux de mesure et hors de la zone proche,
• l'unité de contrôle et de commande est conçue pour la réalisation d'un mode de déclenchement de mesure de gestes, où la détection des fractions réfléchies du rayon lumineux de mesure optique (4) s'effectue automatiquement en continu avec une vitesse minimale définie et, automatiquement par l'unité de contrôle et de commande
° les fractions réfléchies du rayon lumineux de mesure optique (4) détectées en continu sont évaluées par rapport aux paramètres, lesquels dépendent d'un geste codé avec le corps de test (6) coupant le rayon lumineux de mesure (4) de façon codée,
∘ il est vérifié à l'aide des paramètres si celles-ci correspondent aux critères définis, et en cas de correspondance des critères le geste réalisé par l'utilisateur est identifié comme geste de déclenchement de mesure télémétrique, de même que
° en réaction à une identification du geste de déclenchement de mesure télémétrique, une mesure de l'éloignement de l'objet (3) est déclenchée
• dans lequel l'unité de contrôle et de commande est conçue pour la réalisation du mode de déclenchement de mesure de gestes de telle sorte qu'une suite d'éloignements du corps de test traversant le rayon lumineux de mesure (4) sont déterminés automatiquement par l'unité de contrôle et de commande, à l'aide des fractions réfléchies du rayon lumineux de mesure optique (4) détectées en continu, et il est vérifié si les paramètres correspondent aux critères définis à l'aide de la suite d'éloignements - se rapprochant au moins partiellement des paramètres - du corps de test.

4. Appareil de mesure de distance (1) selon la revendication 3,
**caractérisé en ce qu'**en fonction d'au moins un parmi
• une durée, pendant laquelle un groupe d'éloignements du corps de test directement consécutifs et issus de la suite d'éloignements du corps de test se trouvent à l'intérieur d'un intervalle d'éloignement défini,
• une série de modifications d'éloignements mutuels respectifs du corps de test issus de la suite d'éloignements du corps de test comme flancs reconnaissables dans la suite d'éloignements du corps de test, et
• un nombre de modifications d'éloignement du corps de test identifiables comme nécessaires issues de la suite comme flancs reconnaissables dans la courbe des éloignements du corps de test déterminés en continu
il est vérifié si les paramètres correspondent aux critères définis.

5. Appareil de mesure de distance (1) selon la revendication 3 ou 4,
caractérisé en ce l'unité de contrôle et de commande est conçue pour la réalisation du mode de déclenchement de mesure de gestes de telle sorte que, en comparaison avec un mode de mesure où après le déclenchement de la mesure une détermination précise de l'éloignement par rapport à l'objet s'effectue, les éloignements du corps de test de la suite d'éloignements du corps de test sont déterminés avec une exactitude réduite et, par contre, en continu avec une vitesse de répétition plus élevée.

6. Appareil de mesure de distance (1) selon l'une des revendications ci-dessus,
**caractérisé par** une caméra orientée essentiellement dans la même direction que le module de mesure de distance à laser, et dotée d'une unité de traitement d'image, dans lequel
• la caméra est conçue pour la capture, s'effectuant au moins lorsque le mode de déclenchement de mesure de geste est activé, d'une image ou d'une séquence vidéo du corps de test guidé par l'utilisateur, lequel réalise un mouvement coupant un champ de vision défini de la caméra, et
• l'unité de traitement d'image est conçue pour la reconnaissance d'au moins un parmi
° les motifs de gestes correspondant aux critères et
° les motifs de de corps de test dans la séquence d'images ou la séquence vidéo,
et à l'aide de ceux-ci l'unité de contrôle et de commande vérifie en outre, dans le cadre du mode de déclenchement de mesure de geste, si les motifs de geste ou les motifs de corps de test reconnus correspondent aux critères enregistrés ou non, et en cas de correspondance le geste réalisé par l'utilisateur est en outre vérifié comme le geste de déclenchement de mesure télémétrique.

7. Appareil de mesure de distance (1) selon l'une des revendications ci-dessus,
**caractérisé par** un capteur de proximité capacitif ou inductif doté d'un circuit de contrôle de sortie de capteur de proximité, dans lequel
• le capteur de proximité est conçu pour détecter en continu si le corps de test se trouve ou non dans la zone de détection du capteur de proximité, cette détection s'effectuant au moins lorsque le mode de déclenchement de mesure de geste est activé, dans lequel le capteur de proximité est agencé et conçu de telle sorte que sa zone de détection recouvre la zone de proximité définie et souhaitée autour de l'appareil de mesure de distance, et
• le circuit de contrôle de sortie du capteur de proximité est conçu pour contrôler les résultats de la détection en continu, et à l'aide de ces résultats - se rapprochant au moins partiellement des paramètres - pour vérifier en outre si les paramètres correspondent ou non aux critères définis, de sorte qu'en cas de correspondance le geste réalisé par l'utilisateur est en outre vérifié comme le geste de déclenchement de mesure télémétrique.

8. Appareil de mesure de distance (1) selon l'une des revendications ci-dessus,
**caractérisé en ce que** sont définis et enregistrés des critères tels qu'ils sont caractéristiques en tant que gestes de déclenchement de mesure télémétrique réalisés par l'utilisateur pour un corps de test avec une carte ou un panneau portable, possédant au moins une surface comportant partiellement une réflectivité élevée, spécialement dans lequel une surface du panneau ou de la carte comporte un motif de code prédéfini et connu
° formé de zones avec une réflectivité comparativement plus élevée et de zones avec une réflectivité comparativement plus faible ou
° formé d'au moins une parmi des zones de couleurs comparativement plus foncées, plus claires et différentes.

9. Appareil de mesure de distance (1) selon l'une des revendications ci-dessus,
**caractérisé en ce que** sont définis et enregistrés pour les paramètres des critères tels qu'ils sont caractéristiques pour un mouvement du corps de test coupant le rayon lumineux de mesure (4) réalisé avec le corps de test en tant que geste de déclenchement de mesure télémétrique, dans lequel le geste de déclenchement de mesure télémétrique avec le corps de test est réalisé selon au moins une des conditions suivantes :
• avec une vitesse située dans un intervalle de vitesse défini,
• dans un éloignement situé à l'intérieur d'une zone de proximité autour de l'appareil de mesure de distance (1), en particulier entre 5 et 100 cm, spécialement entre 10 et 50 cm,
• durant pendant un temps situé à l'intérieur d'un intervalle de temps défini, et
• à l'intérieur d'une zone de champ de vision définie de l'appareil de mesure de distance (1).

10. Appareil de mesure de distance (1) selon l'une des revendications ci-dessus,
**caractérisé en ce qu'**en réaction à l'identification du geste de déclenchement de mesure télémétrique, la mesure télémétrique par rapport à l'objet (3) est déclenchée et réalisée par l'unité de contrôle et de commande selon au moins une des conditions suivantes :
• automatiquement avec un délai entre environ un quart de seconde et une seconde entière dans un mode standard, en particulier avec un délai d'environ une demi-seconde, et
• automatiquement avec un délai défini entre cinq et quinze secondes dans un mode de déclenchement retardé.

11. Procédé de mesure de distance électro-optique au moyen d'un appareil de mesure de distance portable à laser, doté d'au moins
• un déclenchement d'une opération de mesure de télémétrie et
• une réalisation de l'opération de mesure de télémétrie s'effectuant automatiquement en réaction au déclenchement avec
∘ une émission d'un rayon lumineux de mesure optique (4) dans la direction d'un objet (3) ainsi qu'une détection de fractions réfléchies du rayon lumineux de mesure optique (4) et
∘ une détermination de la distance par rapport à l'objet (3) basée sur les fractions reçues du rayon lumineux de mesure optique (4),
**caractérisé en ce que**
• sont définis et enregistrés pour des paramètres des critères tels qu'ils sont caractéristiques pour un geste fixé de déclenchement de mesure télémétrique, traversant le rayon lumineux, codé par un utilisateur avec un corps de test (6) du rayon lumineux de mesure optique (4), dans lequel le geste de déclenchement de mesure télémétrique comprend
∘ un placement du corps du test dans une zone proche déterminée, de sorte que celui-ci coupe aussi le rayon lumineux de mesure,
∘ un séjour du corps de test dans le rayon lumineux de mesure pendant un intervalle de temps prédéfini et
∘ un éloignement consécutif nécessairement requis du corps de test hors du rayon lumineux de mesure et hors de la zone proche, et
• dans le cadre d'un mode de déclenchement de mesure de geste
° une détection continue des fractions reçues du rayon lumineux de mesure optique (4) s'effectue avec une vitesse minimale définie,
° les fractions réfléchies du rayon lumineux de mesure optique (4) détectées en continu sont évaluées par rapport aux paramètres, lesquels dépendent d'un geste codé avec le corps de test (6) traversant le rayon lumineux de mesure (4) de façon codée,
° il est vérifié à l'aide des paramètres si celles-ci correspondent aux critères définis, et en cas de correspondance des critères le geste réalisé par l'utilisateur est identifié comme geste de déclenchement de mesure télémétrique, de même que
° le déclenchement s'effectue lors de l'identification du geste de déclenchement de mesure télémétrique
dans lequel en fonction d'une courbe d'au moins une parmi
• une intensité et
• une modification d'intensité
des fractions réfléchies du rayon lumineux de mesure optique (4) détectées en continu, il est vérifié si les paramètres correspondent aux critères définis.

12. Procédé de mesure de distance selon la revendication 11,
**caractérisé en ce qu'**en fonction d'au moins un parmi
• une durée, pendant laquelle l'intensité se trouve à l'intérieur d'un intervalle d'intensité définie,
• une série de modifications d'intensités comme flancs reconnaissables dans la courbe d'intensité, et
• un nombre de modifications d'intensités comme flancs reconnaissables dans la courbe d'intensité
il est vérifié si les paramètres correspondent aux critères définis.

13. Procédé de mesure de distance électro-optique au moyen d'un appareil de mesure de distance portable à laser (1), doté d'au moins
• un déclenchement d'une opération de mesure de télémétrie et
• une réalisation de l'opération de mesure de télémétrie s'effectuant automatiquement en réaction au déclenchement avec
° une émission d'un rayon lumineux de mesure optique (4) dans la direction d'un objet (3) ainsi qu'une détection de fractions réfléchies du rayon lumineux de mesure optique (4) et
° une détermination de la distance par rapport à l'objet (3) basée sur les fractions reçues du rayon lumineux de mesure optique (4),
**caractérisé en ce que**
• sont définis et enregistrés pour des paramètres des critères tels qu'ils sont caractéristiques pour un geste fixé de déclenchement de mesure télémétrique, traversant le rayon lumineux, codé par un utilisateur avec un corps de test (6) du rayon lumineux de mesure optique (4), dans lequel le geste de déclenchement de mesure télémétrique comprend
° un placement du corps du test dans une zone proche déterminée, de sorte que celui-ci coupe aussi le rayon lumineux de mesure,
∘ un séjour du corps de test dans le rayon lumineux de mesure pendant un intervalle de temps prédéfini et
∘ un éloignement consécutif nécessairement requis du corps de test hors du rayon lumineux de mesure et hors de la zone proche, et
• dans le cadre d'un mode de déclenchement de mesure de geste
∘ une détection continue des fractions reçues du rayon lumineux de mesure optique (4) s'effectue avec une vitesse minimale définie,
∘ les fractions réfléchies du rayon lumineux de mesure optique (4) détectées en continu sont évaluées par rapport aux paramètres, lesquels dépendent d'un geste codé avec le corps de test (6) traversant le rayon lumineux de mesure (4) de façon codée,
∘ il est vérifié à l'aide des paramètres si celles-ci correspondent aux critères définis, et en cas de correspondance des critères le geste réalisé par l'utilisateur est identifié comme geste de déclenchement de mesure télémétrique, de même que
° le déclenchement s'effectue lors de l'identification du geste de déclenchement de mesure télémétrique
dans lequel à l'aide des fractions réfléchies du rayon lumineux de mesure optique (4) détectées en continu, une suite d'éloignements par rapport au corps de test coupant le rayon lumineux de mesure (4) est déterminée et il est vérifié si les paramètres correspondent aux critères définis à l'aide de la suite d'éloignements du corps de test se rapprochant au moins partiellement des paramètres.

14. Procédé de mesure de distance selon la revendication 13,
**caractérisé en ce qu'**en fonction d'au moins un parmi
• une durée, pendant laquelle un groupe d'éloignements du corps de test directement consécutifs et issus de la suite d'éloignements du corps de test se trouvent à l'intérieur d'un intervalle d'éloignement défini,
• une série de modifications d'éloignements mutuels respectifs du corps de test issus de la suite d'éloignements du corps de test comme flancs reconnaissables dans la suite d'éloignements du corps de test, et
• un nombre de modifications d'éloignement du corps de test identifiables comme nécessaires issues de la suite comme flancs reconnaissables dans la courbe des éloignements du corps de test déterminés en continu
il est vérifié si les paramètres correspondent aux critères définis.

15. Procédé de mesure de distance selon l'une des revendications 11 à 14,
**caractérisé en ce que** les éloignements du corps de test de la suite d'éloignements du corps de test sont déterminés avec une exactitude réduite et, par contre, en continu avec une vitesse de répétition plus élevée, comparativement à un mode de mesure, où après déclenchement de la mesure la détermination précise de l'éloignement par rapport à l'objet s'effectue.

16. Produit-programme informatique doté de code de programmation, enregistré sur un support lisible par machine, dans lequel le produit-programme informatique doté de code de programmation est disposé pour la commande ou l'exécution d'un procédé de mesure de distance selon l'une des revendications 11 à 15, lorsque le programme est exécuté sur une unité de traitement des données électronique conçue comme unité de contrôle et de commande d'un appareil de mesure de distance (1) selon l'une des revendications 1 à 10.
